# EUROPÄISCHE PATENTSCHRIFT

(11) **EP 3 987 191 B1**
(45) Veröffentlichungstag und Bekanntmachung des Hinweises auf die Patenterteilung: **29.11.2023**
(21) Anmeldenummer: 21737575.7
(22) Anmeldetag: 22.06.2021
(51) Int. Cl.: F16B 31/02, G01L 5/24, G01L 1/22

(54) **SCHRAUBENMUTTER UND MONTAGEVORRICHTUNG**
SCREW NUT AND MOUNTING DEVICE
ÉCROU DE VIS ET DISPOSITIF DE MONTAGE

(30) Priorität: 24.06.2020 DE 102020116618
(43) Veröffentlichungstag der Anmeldung: 27.04.2022
(73) Patentinhaber: Micro-Sensys GmbH, 99098 Erfurt (DE)
(72) Erfinder: JURISCH, Reinhard, 99438 Meckfeld bei Bad Berka (DE); PEITSCH, Peter, 99099 Erfurt (DE)
(74) Vertreter: Liedtke & Partner Patentanwälte
(86) Internationale Anmeldenummer: PCT/EP2021/066916
(87) Internationale Veröffentlichungsnummer: WO 2021/259897

(56) Entgegenhaltungen:
- WO-A1-2017/203220
- DE-A1-102005 015 688
- US-A1- 2007 204 699
- US-A1- 2010 054 891
- US-A1- 2013 186 951

## Beschreibung

Die Erfindung betrifft eine Schraubenmutter und eine Montagevorrichtung.

Aus dem Stand der Technik ist, wie in der DE 10 2009 038 211 A1 beschrieben, eine Vorrichtung zur Bestimmung und/oder Überwachung einer Vorspannkraft einer Schraubverbindung bekannt. Die Vorrichtung umfasst einen Sensor zur Bestimmung und/oder Überwachung der Vorspannkraft der Schraubverbindung, welcher Daten erzeugt, die vom Wert der Vorspannkraft und/oder von einer Änderung der Vorspannkraft abhängig sind, eine Sendeeinheit zum Übertragen der Daten des Sensors, und eine Energiequelle, welche den Sensor und/oder die Sendeeinheit mit elektrischer Energie versorgt.

In der WO 2017/203220 A1 werden ein Verfahren und eine Vorrichtung zur Messung einer Resonanzfrequenz eines Gegenstands und zur Überwachung einer Zugbelastung in einer Schraube beschrieben. Eine intelligente Mutter-Schraube-Anordnung umfasst eine Mutter, eine Schraube, die an der Mutter befestigbar ist, und eine Kappe, die lösbar an der Mutter montierbar ist. Die Kappe enthält Sensormittel zum Erfassen der Zugbelastung auf die Mutter-Schraube-Anordnung als Maß für die Festigkeit der Mutter auf der Schraube. Die Kappe enthält zudem einen Sender zum Übertragen der an der Mutter-Schraube-Anordnung erfassten Zugbelastung an eine entfernte Stelle, um Änderungen der Zugbelastung zu überwachen.

Aus der US 2010/0054891 A1 sind eine Befestigungsvorrichtung, die eine Schraube oder eine Mutter umfasst, und ein Erfassungssystem der Befestigungsvorrichtung, das eine Axialkraft der Befestigungsvorrichtung erfasst, bekannt. Das Erfassungssystem umfasst einen Axialkraftdetektor mit einem Dehnungsmessstreifen und einem IC-Tag, wobei der Dehnungsmessstreifen an einer vorbestimmten Stelle vorgesehen ist, um einen Axialkraftwert der Befestigungsvorrichtung zu erfassen, und der IC-Tag mit dem Dehnungsmessstreifen verbunden ist und den erfasste Axialkraftwert und eindeutige Identifikationsinformationen drahtlos übermittelt. Der Axialkraftdetektor wird mit Strom versorgt. Ein Lesegerät liest die vom Axialkraftdetektor übertragenen Daten.

In der US 2007/0204699 A1 wird eine Dehnungsmessung in einem entfernt angeordneten mechanischen Gerät beschrieben. Eine Sensoranordnung misst im mechanischen Gerät und übermittelt eine Angabe der Messung über eine drahtlose Verbindung an ein entferntes Gerät.

Aus der DE 10 2005 015 688 A1 sind eine Vorrichtung und ein Verfahren zur Erfassung von Daten betreffend die Vorspannkraft von Verbindungselementen und von Markier-Daten von Verbindungselementen bekannt. Die Vorrichtung umfasst einen Ultraschall-Dünnschichttechnik-Sensor zur Messung der Vorspannkraft in einem Verbindungselement, der als ein fest anhaftender Teil des Verbindungselements ausgebildet ist, einen Datenträger, der ebenfalls als ein fest anhaftender Teil des Verbindungselements ausgebildet ist und der Markier-Daten zur Identifizierung des Verbindungselements enthält, und ein Mittel für die Zuordnung der gemessenen Vorspannkraft zu den Markier-Daten eines bestimmten Verbindungselements.

In der US 2013/0186951 A1 wird ein intelligentes Befestigungselement beschrieben. Das intelligente Befestigungselement weist einen Kopf und einen Schaft mit Außengewinde zum Gewindeeingriff mit einem Strukturelement auf. Der Kopf weist eine in der oberen Fläche ausgebildete Aussparung zum Anbringen eines RFID-Tags auf. Der RFID-Tag umfasst einen Speicher, der spezifische Informationen des Befestigungselementes enthält, eine Antenne zum Ermöglichen einer bidirektionalen Kommunikation mit einem RFID-Tag-Lesegerät, und einen Drehmomentwertsensor zum Bestimmen des Drehmoments, das von einem Befestigungselementinstallationswerkzeug auf das Befestigungselement aufgebracht wird. Nach der Installation wird das vorhandene Drehmoment an einer Mehrzahl von Befestigungselementen gemessen, indem ein RFID-Tag-Lesegerät verwendet wird, um die im Speicher jedes Befestigungselements gespeicherten Informationen zu scannen.

Der Erfindung liegt die Aufgabe zu Grunde, eine gegenüber dem Stand der Technik verbesserte Schraubenmutter und eine gegenüber dem Stand der Technik verbesserte Montagevorrichtung anzugeben.

Die Aufgabe wird erfindungsgemäß gelöst durch eine Schraubenmutter mit den Merkmalen des Anspruchs 1 und eine Montagevorrichtung mit den Merkmalen des Anspruchs 11.

Vorteilhafte Ausgestaltungen der Erfindung sind Gegenstand der Unteransprüche.

Eine erfindungsgemäße Schraubenmutter umfasst ein Sensormodul zur Ermittlung einer Vorspannkraft einer mittels der Schraubenmutter herzustellenden oder hergestellten Schraubverbindung, wobei das Sensormodul mindestens einen an einem Grundkörper der Schraubenmutter angeordneten Verformungserfassungssensor zur Erfassung einer Verformung des Grundkörpers der Schraubenmutter und eine RFID-Transpondereinheit umfasst, und wobei eine Leiterplatte des Sensormoduls an einer Stirnseite des Grundkörpers angeordnet ist, beispielsweise direkt daran angeordnet ist oder an beispielsweise auf einer zwischen der Leiterplatte und der Stirnseite angeordneten, beispielsweise auf der Stirnseite aufliegenden, Schicht angeordnet ist. Die Leiterplatte ist insbesondere an dieser Stirnseite des Grundkörpers befestigt, insbesondere montiert. Insbesondere sind auf der Leiterplatte eine Antenne der RFID-Transpondereinheit und eine elektronische Schaltung des Sensormoduls ausgebildet. Vorteilhafterweise ist auf der Leiterplatte die gesamte RFID-Transpondereinheit angeordnet. Die Leiterplatte ist mit dem mindestens einen Verformungserfassungssensor elektrisch leitfähig gekoppelt.

Die erfindungsgemäße Schraubenmutter ist eine telemetrische Schraubenmutter, welche, insbesondere aufgrund der RFID-Technologie, eine kontaktlose Ermittlung der Vorspannkraft der mittels der Schraubenmutter herzustellenden oder hergestellten Schraubverbindung ermöglicht, da die Datenübertragung zwischen dem Sensormodul, insbesondere dessen RFID-Transpondereinheit, und einer RFID-Leseeinheit drahtlos über ein elektromagnetisches Feld und somit mittels einer Funkübertragung erfolgt. Des Weiteren ist es nicht erforderlich, dass die Schraubenmutter eine elektrische Energiequelle zum Betrieb des Sensormoduls aufweist, denn mittels der RFID-Technologie erfolgt auch die Übertragung elektrischer Energie von der RFID-Leseeinheit auf das Sensormodul mittels des elektromagnetischen Feldes. Das Sensormodul, insbesondere die RFID-Transpondereinheit, kann jedoch beispielsweise einen aufladbaren elektrischen Energiespeicher, insbesondere einen Kondensator, zur Speicherung, zumindest zur kurzzeitigen Zwischenspeicherung, der von der RFID-Leseeinheit übertragenen elektrischen Energie aufweisen, wie im Folgenden noch dargelegt wird.

Die Leiterplatte ist erfindungsgemäß ringförmig ausgebildet, insbesondere, zumindest im Wesentlichen, kreisrund oder elliptisch oder mit sechseckiger Außenkontur. Dabei ist eine lichte Weite einer Durchführungsöffnung der Leiterplatte und zweckmäßigerweise auch des gesamten Sensormoduls mindestens so groß wie eine lichte Weite einer Schrauböffnung des Grundkörpers der Schraubenmutter, um das Aufschrauben der Schraubenmutter auf eine Schraube oder einen Gewindebolzen oder eine Gewindestange zu ermöglichen. Bei einer runden Durchführungsöffnung ist somit ein Durchmesser der Durchführungsöffnung mindestens so groß wie ein Durchmesser der Schrauböffnung. Vorteilhafterweise ist die lichte Weite der Durchführungsöffnung und bei einer runden Durchführungsöffnung deren Durchmesser größer als die lichte Weite bzw. der Durchmesser der Schrauböffnung.

Der mindestens eine Verformungserfassungssensor ist vorteilhafterweise im Bereich einer Außenumfangsseite des Grundkörpers angeordnet. Beispielsweise ist er auf einer Seitenfläche, d. h. auf einem Werkzeugangriffsflächenabschnitt, angeordnet, oder er ist beispielsweise in einer Kavität angeordnet, welche in einer Seitenfläche ausgebildet ist, oder er ist beispielsweise in einer Axialbohrung im Bereich einer Kante zwischen zwei aneinander angrenzenden Seitenflächen angeordnet. Ein als Sechskantmutter ausgebildeter Grundkörper der Schraubenmutter weist sechs solche Seitenflächen und sechs Kanten auf, wobei die jeweilige Kante zwischen jeweils zwei aneinander angrenzenden Seitenflächen ausgebildet ist. Ein als Vierkantmutter ausgebildeter Grundkörper weist entsprechend vier solche Seitenflächen und vier Kanten auf.

Vorteilhafterweise sind alle Bestandteile des Sensormoduls, beispielsweise mit Ausnahme des mindestens einen Verformungserfassungssensors oder der mehreren Verformungserfassungssensoren und/oder eines oder mehrerer weiterer Sensoren und elektrischer Verbindungsleitungen zwischen der Leiterplatte und dem mindestens einen oder dem jeweiligen Verformungserfassungssensor und/oder zwischen der Leiterplatte und dem jeweiligen weiteren Sensor auf der ringförmigen Leiterplatte und somit zusammen mit der Leiterplatte an der Stirnseite des Grundkörpers, insbesondere auf der Stirnseite, angeordnet, insbesondere montiert, insbesondere befestigt, und das gesamte Sensormodul weist die Durchführungsöffnung auf, wobei die Anordnung auf dem Grundkörper derart ausgebildet ist, dass die Durchführung der Schraube, des Gewindebolzens oder der Gewindestange durch das Sensormodul hindurch ermöglicht ist. Weist das Sensormodul eine Schutzhülle auf, so gilt dies vorteilhafterweise für das Sensormodul inklusive der Schutzhülle.

Der mindestens eine Verformungserfassungssensor ist vorteilhafterweise als ein Sensor zur Erfassung von Dehnungen, Stauchungen und/oder Scherkräften ausgebildet, insbesondere als ein Dehnungssensor, insbesondere als ein Dehnmessstreifensensor.

Wie bereits oben erwähnt, kann das Sensormodul, insbesondere dessen RFID-Transpondereinheit, in einer möglichen Ausführungsform einen Energiespeicher, insbesondere einen Kondensator, aufweisen, welcher eine, zumindest kurzfristige, Speicherung mittels einer RFID-Leseeinheit auf die RFID-Transpondereinheit übertragener elektrischer Energie ermöglicht, um dadurch beispielsweise auch dann die Vorspannkraft mittels des Sensormoduls ermitteln zu können, wenn keine Energieübertragung mittels des RFID-Lesegeräts auf die RFID-Transpondereinheit stattfindet.

Die Antenne ist vorteilhafterweise als eine Spule auf der Leiterplatte angeordnet oder ausgebildet. Beispielsweise ist sie als eine gedruckte Spule auf der Leiterplatte ausgebildet oder als eine gewickelte Spule auf der Leiterplatte angeordnet. Die Antenne ist somit vorteilhafterweise als eine Spule ausgebildet, welche beispielsweise auf die Leiterplatte aufgedruckt ist oder gewickelt und auf der Leiterplatte angeordnet ist. Die Spule weist dabei insbesondere mehrere Spulenwindungen auf, kann in einer möglichen Ausführungsform aber auch nur eine Spulenwindung aufweisen. Vorteilhafterweise erstreckt sich die Antenne über einen gesamten Umfang der Leiterplatte. Dadurch wird ein Auslesen des Sensormoduls mittels des RFID-Lesegeräts an allen Umfangspositionen der Schraubenmutter ermöglicht.

In einer möglichen Ausführungsform umfasst das Sensormodul mehrere Verformungserfassungssensoren, beispielsweise zwei oder mehr als zwei Verformungserfassungssensoren. Vorteilhafterweise sind diese Verformungserfassungssensoren dann um einen Außenumfang gleichmäßig verteilt am Grundkörper der Schraubenmutter angeordnet.

Vorteilhafterweise umfasst die Schraubenmutter eine Schutzhülle für das Sensormodul.

Eine erfindungsgemäße Montagevorrichtung umfasst eine solche Schraubenmutter und einen Schraubenschlüssel.

Beispielsweise umfasst die Montagevorrichtung ein RFID-Lesegerät, welches fest mit dem Schraubenschlüssel verbunden ist oder lösbar mit dem Schraubenschlüssel verbindbar oder verbunden ist.

Vorteilhafterweise ist eine Schraubenmutteraufnahme des Schraubenschlüssels korrespondierend zur Schraubenmutter ausgebildet. Beispielsweise weist die Schraubenmutteraufnahme des Schraubenschlüssels mindestens eine Ausnehmung zur Aufnahme des mindestens einen Verformungserfassungssensors der Schraubenmutter auf. Diese mindestens eine Ausnehmung ist dabei vorteilhafterweise korrespondierend zu einem über eine Oberfläche des Grundkörpers der Schraubenmutter überstehenden Bereichs des mindestens einen Verformungserfassungssensors ausgebildet.

Die Schraubenmutter ermöglicht insbesondere eine Dehnungsmessung an der Schraubenmutter, d. h. an ihrem Grundkörper. Hierfür ist der mindestens eine Verformungserfassungssensor, insbesondere Dehnmessstreifensensor, vorteilhafterweise zusammen mit einer Analog-Digital-Wandlereinheit und der RFID-Transpondereinheit, welche eine kontaktlose elektromagnetische Kopplung des Sensormoduls, insbesondere mittels eines RFID-Lesegeräts, zur Energie- und Datenübertragung ermöglicht, am Grundkörper der Schraubenmutter angeordnet, wobei die Leiterplatte, welche gleichzeitig Schaltung, Antenne und Sensorkontaktierung realisiert und zweckmäßigerweise so gestaltet ist, dass weiterhin ein Schraubenschlüssel verwendet werden kann und vorteilhafterweise die Schraube oder der Gewindebolzen hindurchgeführt werden kann, an dessen Stirnseite, d. h. insbesondere an einer Stirnfläche des Grundkörpers, angeordnet ist.

Die Erfassung der Verformung, insbesondere der Dehnung (oder Stauchung, da dies eine negative Dehnung ist), erfolgt mittels des mindestens einen Verformungserfassungssensors vorteilhafterweise an der Außenumfangsseite des Grundkörpers der Schraubenmutter oder zumindest im Bereich der Außenumfangsseite, wozu der mindestens eine Verformungserfassungssensor entsprechend angeordnet ist, wie oben beschrieben. Erfasst wird insbesondere eine Verformung, insbesondere Dehnung und/oder Stauchung, d. h. negative Dehnung, in Axialrichtung der Schraubenmutter, d. h. in Schraubrichtung der Schraubenmutter und somit der herzustellenden oder hergestellten Schraubverbindung. Vorteilhafterweise umfasst das Sensormodul, wie oben beschrieben, mehrere solche Verformungserfassungssensoren, so dass eine entsprechende Verformungserfassung an mehreren Messpunkten am Grundkörper der Schraubenmutter ermöglicht wird. In einer vorteilhaften Ausführungsform ist der mindestens eine oder der jeweilige Verformungserfassungssensor, wie oben bereits erwähnt, in einer im Grundkörper der Schraubenmutter ausgebildeten Kavität angeordnet. Dadurch schließt der Verformungserfassungssensor vorteilhafterweise bündig mit einer angrenzenden Außenoberfläche des Grundkörpers ab.

Die erfindungsgemäße Lösung ermöglicht insbesondere eine schnelle, einfache, zuverlässige und kostengünstige Bestimmung der Vorspannkraft in Schraubverbindungen. Vorteilhafterweise müssen für diese erfindungsgemäße Lösung an für die Schraubverbindung verwendeten Bauteilen, zum Beispiel an einer Schraube, Unterlegscheibe und vorteilhafterweise auch am Grundkörper der Schraubenmutter möglichst wenig oder keine mechanischen Änderungen vorgenommen werden. Dadurch werden bestehende Normen und Zulassungen für diese Bauteile weiterhin eingehalten. Bei der oben beschriebenen Lösung ist dies vorteilhafterweise zumindest für diejenigen Ausführungsformen der Schraubenmutter der Fall, bei denen für den mindestens einen oder den jeweiligen Verformungserfassungssensor keine Kavität oder Axialbohrung im Grundkörper der Schraubenmutter ausgebildet ist, denn in diesen Ausführungsformen sind alle Komponenten des Sensormoduls an der Oberfläche des Grundkörpers befestigt. Der Grundkörper der Schraubenmutter entspricht dabei vorteilhafterweise der herkömmlichen, beispielsweise genormten und/oder zugelassenen, Schraubenmutter. An diesem Grundkörper sind vorteilhafterweise keine mechanischen Änderungen vorgenommen, sondern das Sensormodul ist lediglich an diesem Grundkörper, d. h. an der herkömmlichen Schraubenmutter, befestigt.

Die Messung, d. h. die Verformungserfassung am Grundkörper der Schraubenmutter, erfolgt vorteilhafterweise, wie oben bereits erwähnt, mittels eines beispielsweise als Dehnungs- oder Kraftsensor ausgebildeten Verformungserfassungssensors und ohne eine elektrische Kontaktierung an der Schraubenmutter, d. h. mittels einer drahtlosen Datenübertragung und insbesondere auch mittels einer drahtlosen elektrischen Energieübertragung zwischen der Schraubenmutter, insbesondere deren Sensormodul, und dem RFID-Lesegerät. Die Anbringung des Sensormoduls am Grundkörper der Schraubenmutter vereinfacht die Durchführung solcher Messungen erheblich, da Schraubenmuttern standardisiert und leicht austauschbar sind und eine wesentlich geringere Vielfalt aufweisen als beispielsweise Schrauben.

Zur Vermeidung von möglichen Einflüssen auf die Festigkeit der Schraubverbindung ist eine Baugröße des Sensormoduls vorteilhafterweise, zumindest weitestgehend, miniaturisiert. Sehr vorteilhaft hierfür ist die Ausbildung des zumindest einen oder des jeweiligen Verformungserfassungssensors als ein Dehnmessstreifensensor, auch kurz als DMS-Sensor bezeichnet. Wie oben bereits beschrieben, wird mittels des zumindest einen Verformungserfassungssensors, insbesondere DMS-Sensors, vorteilhafterweise die Dehnung (auch negative Dehnung, d. h. Stauchung) des Grundkörpers der Schraubenmutter an einer Seitenfläche oder bei mehreren solchen Verformungserfassungssensoren an mehreren Seitenflächen des Grundkörpers der Schraubenmutter erfasst, welche mit einer in der Schraubverbindung anliegenden Vorspannkraft korreliert ist.

Für die Realisierung der kontaktlosen Erfassung der Dehnung wird, wie bereits beschrieben, vorteilhafterweise die RFID-Technologie zur Energie- und Datenübertragung verwendet. Dadurch ist keine zusätzliche elektrische Energiequelle, insbesondere keine Batterie, zur elektrischen Energieversorgung erforderlich, so dass das gesamte Sensormodul in einer miniaturisierten und robusten Bauform am Grundkörper der Schraubenmutter angebracht und mit dieser zusammen als ein Bauteil in einer jeweiligen Applikation sehr flexibel genutzt werden kann.

Für das Auslesen der in der Schraubverbindung anliegenden Vorspannkraft kann beispielsweise ein standardmäßiges mobiles RFID-Lesegerät verwendet werden. Durch die vorteilhafte Ausgestaltung des Sensormoduls, insbesondere durch die sich vorteilhafterweise über einen gesamten Umfang der erfindungsgemäß ringförmig ausgebildeten Leiterplatte erstreckenden Antenne ist ein richtungsunabhängiges und somit ein von einem Drehwinkel der Schraubenmutter unabhängiges und dadurch schnelles, ergonomisches und sicheres Auslesen von ermittelten und insbesondere bereits im Sensormodul digitalisierten Messwerten ermöglicht.

Die hier beschriebene Schraubenmutter, insbesondere mit dem hier beschriebenen Sensormodul, ermöglicht somit eine zuverlässige und ergonomische Messung der Vorspannkraft sowohl bei einer Installation der Schraubverbindung als auch beispielsweise bei nachfolgenden zyklischen Überprüfungen während eines gesamten Lebenszyklus der Schraubverbindung, insbesondere aufgrund der Tatsache, dass das Sensormodul passiv arbeitet, d. h. keine Batterie benötigt und über das externe RFID-Lesegerät mit elektrischer Energie versorgt wird.

Die hier beschriebene Lösung weist erhebliche Vorteile zu anderen möglichen Lösungen zur Ermittlung der Vorspannkraft einer Schraubverbindung auf. Die Vorspannkraft ist die qualitätsbestimmende Kenngröße für jede Schraubverbindung, so dass deren Messung für viele Anwendung erforderlich ist. Ein Messen eines Drehmomentes mittels eines Drehmomentschlüssels repräsentiert den Stand der heute in der täglichen Praxis genutzten Technik. Die mit diesem Verfahren gewonnenen Messwerte sind jedoch stark von vorliegenden Reibungsverhältnissen abhängig, so dass zwischen dem gemessenen Drehmoment und der in der Schraubverbindung anliegenden Vorspannkraft nicht immer ein eindeutiger Zusammenhang besteht. Mit der hier beschriebenen Lösung werden derartige Messungenauigkeiten vermieden, da die hierdurch ermittelten Werte der Vorspannkraft unabhängig sind von Reibungsverhältnissen, denn mittels der hier beschriebenen Lösung wird vorteilhafterweise die Verformung, insbesondere in Axialrichtung des Grundkörpers der Schraubenmutter, ermittelt, insbesondere eine Dehnung und/oder Stauchung, d. h. negative Dehnung.

Bei der hier beschriebenen Lösung erfolgt die Ermittlung der in der Schraubverbindung anliegenden Vorspannkraft vorteilhafterweise an mindestens einer Seitenfläche oder bei mehreren Verformungserfassungssensoren entsprechend an mehreren Seitenflächen des Grundkörpers der Schraubenmutter mittels eines bzw. mehrerer insbesondere als Dehnungssensoren ausgebildeten Verformungserfassungssensoren.

Der Grundkörper der Schraubenmutter besteht vorteilhafterweise aus Metall, da insbesondere für Schraubverbindungen mit Schraubenmuttern aus Metall die Messung der Vorspannkraft von Bedeutung ist. Die beschriebene Lösung ist jedoch ebenso für Schraubenmuttern geeignet, deren Grundkörper aus einem anderen Material, beispielsweise aus Kunststoff oder Keramik, ausgebildet ist.

Beim Anziehen der Schraubverbindung werden im Grundkörper der Schraubenmutter mechanische Spannungen aufgebaut, welche direkt mit der anliegenden Vorspannkraft korreliert sind und an der jeweiligen Seitenfläche des Grundkörpers als eine Dehnung (oder Stauchung als negative Dehnung) registriert werden können.

Aus Symmetriegründen ist der jeweilige Verformungserfassungssensor vorteilhafterweise zentrisch oder möglichst zentrisch auf der Seitenfläche des Grundkörpers der Schraubenmutter positioniert. Da unter realen Einsatzbedingungen aufgrund von Unebenheiten an den beteiligten Bauteilen, einer schrägen Montage und/oder von Verunreinigungen ein Anziehen der Schraubverbindung meist nicht exakt gleichartig erfolgt und damit zu keiner rotationssymmetrischen Verteilung der Kräfte führt, sind zur Erhöhung der Messgenauigkeit vorteilhafterweise mindestens zwei insbesondere als DMS-Sensor ausgebildete Verformungserfassungssensoren vorgesehen, welche beispielsweise an zwei gegenüberliegenden Seitenflächen des Grundkörpers der Schraubenmutter angeordnet sind oder in einer jeweiligen Kavität in der jeweiligen Seitenfläche angeordnet sind oder in sich gegenüberliegenden Axialbohrungen angeordnet sind. Vorteilhafterweise ist dann eine Verrechnung und/oder Bewertung der jeweiligen Messwerte dieser Verformungserfassungssensoren vorgesehen, beispielsweise mittels eines geeigneten Auswertealgorithmus, zum Beispiel durch einfache Addition oder Bildung eines Mittelwertes.

Als Verformungserfassungssensor, insbesondere DMS-Sensor, sind, insbesondere bei einem aus Metall ausgebildeten Grundkörper der Schraubenmutter, vorteilhafterweise alle für eine Montage auf Metall gebräuchlichen Sensortypen zur Messung von Dehnungen, Stauchungen und Scherkräften verwendbar. Beispielsweise ist der mindestens eine oder der jeweilige Verformungserfassungssensor als ein Metall-DMS-Widerstand auf Folie, als ein Halbleiter-DMS-Widerstand oder als ein piezoresistiver DMS ausgebildet.

Eine Montage des Verformungserfassungssensors auf der Seitenfläche des Grundkörpers der Schraubenmutter oder die Montage des jeweiligen Verformungserfassungssensors auf der jeweiligen Seitenfläche des Grundkörpers der Schraubenmutter erfolgt vorteilhafterweise durch Kleben, zum Beispiel mit einem Acrylat oder mit einem Epoxidharz, durch Punktschweißen oder Aufglasen.

In einer möglichen Ausführungsform ist der Verformungserfassungssensor oder der jeweilige Verformungserfassungssensor, insbesondere DMS-Sensor, als ein Einzelsensorelement ausgebildet, welches so montiert ist, dass eine Kraft in Axialrichtung der Schraubenmutter gemessen wird, d. h. in Richtung ihrer Längsachse, insbesondere ihrer Rotationsachse, um welche sie zur Herstellung der Schraubverbindung gedreht wird.

DMS-Sensoren sind jedoch meist sehr niederohmig (<=1 kΩ) und liefern ein nur sehr kleines Messsignal (<1 mV), welches oft auch temperaturabhängig ist. Aus diesem Grund ist in einer vorteilhaften Ausführungsform vorgesehen, dass das Einzelsensorelement im Verformungserfassungssensor oder im jeweiligen Verformungserfassungssensor zusammen mit mindestens einem Referenzfestwiderstand als Halbbrücke oder als Vollbrücke betrieben wird.

In einer weiteren möglichen Ausführungsform ist vorgesehen, dass die mehreren jeweils als DMS-Sensor, insbesondere als Einzelsensorelement, ausgebildeten Verformungserfassungssensoren der Schraubenmutter zu einer Messbrücke verschaltet sind. Dadurch kann die Auswertung der erfassten Messwerte vereinfacht werden.

In einer weiteren möglichen Ausführungsform weist der mindestens eine oder der jeweilige Verformungserfassungssensor, insbesondere DMS-Sensor, mehrere Sensorelemente auf, welche in Form einer Halbbrücke oder Vollbrücke verschaltet sind und/oder über eine Temperaturkompensation verfügen. Dies ist insbesondere vorteilhaft bei Schraubenmuttern, insbesondere Grundkörpern, mit großer Baugröße.

In einer möglichen weiteren Ausführungsform ist der mindestens eine oder der jeweilige Verformungserfassungssensor beispielsweise als ein komplexerer DMS-Sensor ausgebildet, insbesondere als ein so genannter Rosetten-DMS. Hierfür ist jedoch eine mehrkanalige Messelektronik erforderlich.

Wie oben bereits beschrieben, erfolgt das Auslesen der mittels des mindestens einen Verformungserfassungssensors oder der mittels der mehreren Verformungserfassungssensoren erfassten Messwerte unter Anwendung der RFID-Technologie, d. h. mittels eines RFID-Lesegeräts und mittels der RFID-Transpondereinheit des Sensormoduls, insbesondere kontaktlos und drahtlos und ohne Verwendung einer Batterie im Sensormodul. Das RFID-Lesegerät und die RFID-Transpondereinheit arbeiten dabei beispielsweise im HF-Bereich oder UHF-Bereich. Die elektrische Energieversorgung des Sensormoduls erfolgt hierbei durch das vom RFID-Lesegerät ausgesandte elektromagnetische Feld. Eine bidirektionale Datenübertragung zwischen dem RFID-Lesegerät und dem Sensormodul, insbesondere dessen RFID-Transpondereinheit, erfolgt, wie bei der RFID-Technologie üblich, ebenfalls über das gleiche elektromagnetische Feld.

Das Sensormodul, insbesondere dessen RFID-Transpondereinheit, umfasst vorteilhafterweise ein so genanntes Power Management, d. h. eine Energiemanagementeinheit. Sie beinhaltet beispielsweise eine Spannungsstabilisierung, eine Filterung, eine Spannungsüberwachung sowie optional den bereits erwähnten Energiespeicher, insbesondere in Form eines Kondensators, welcher bei Abschaltung des elektromagnetischen Feldes des RFID-Lesegerätes, beispielsweise um durch dieses Abschalten ein Signal-Rausch-Verhältnis zu verbessern, für eine vorgegebene Mindestzeit die elektrische Energieversorgung sicherstellt, so dass auch in diesem Fall die Durchführung der Ermittlung der Vorspannkraft möglich ist.

Für eine Messung der Spannung des mindestens einen insbesondere als DMS-Sensor ausgebildeten Verformungserfassungssensors oder der mehreren Verformungserfassungssensoren ist vorteilhafterweise ein Analog-Digital-Wandler vorgesehen, welcher, insbesondere bei mehreren Verformungserfassungssensoren, vorteilhafterweise mehrere Signaleingänge aufweist. Alternativ kann auch für jeden Verformungserfassungssensor ein separater Analog-Digital-Wandler vorgesehen sein, wobei in diesem Fall die Analog-Digital-Wandler zur Verbesserung der Störfestigkeit vorteilhafterweise räumlich möglichst nah bei dem jeweiligen Verformungserfassungssensor positioniert sind.

Wie bereits oben erwähnt, ist die Leiterplatte des Sensormoduls vorteilhafterweise ausgebildet. Sie weist vorteilhafterweise eine, zumindest näherungsweise, kreisrunde oder elliptische Kontur oder eine sechseckige Außenkontur umfassende Kontur auf. Auf der Leiterplatte sind vorteilhafterweise alle elektronischen Bauteile des Sensormoduls, natürlich mit Ausnahme des mindestens einen oder des jeweiligen Verformungserfassungssensors, angeordnet. Ein Material der Leiterplatte ist beispielsweise FR4 oder ein ähnliches Material. Die Leiterplatte umfasst beispielsweise mehrere Lagen, zum Beispiel zwei bis sechs Lagen. Eine Dicke der Leiterplatte beträgt beispielsweise ca. 1,0 mm. Alternativ ist für die Leiterplatte beispielsweise die Verwendung einer Polymerfolie möglich. Die Leiterplatte ist vorteilhafterweise auf der einer Krafteinwirkung entgegengesetzten Stirnseite des Grundkörpers der Schraubenmutter angeordnet. Sie ist vorteilhafterweise mit dem Grundkörper der Schraubenmutter fest verbunden. Sie ist vorteilhafterweise koaxial mit dem Grundkörper der Schraubenmutter positioniert. Das Anordnen der Leiterplatte auf der der Krafteinwirkung entgegengesetzten Seite bedeutet insbesondere, dass es bei der hier beschriebenen Schraubenmutter vorgesehen ist, sie in der Schraubverbindung derart anzuordnen, dass die Leiterplatte auf der der Krafteinwirkung entgegengesetzten Seite positioniert ist. Dadurch wird ein Zerstören des Sensormoduls durch die Krafteinwirkung der Schraubverbindung vermieden.

Die Größe der Durchführungsöffnung in der ringförmigen Leiterplatte ist, wie oben bereits erwähnt, zweckmäßigerweise so dimensioniert, dass die für die Schraubverbindung verwendete Schraube oder Gewindestange oder der Gewindebolzen sicher durch diese Durchführungsöffnung durchgesteckt werden kann.

Aufgrund eines erforderlichen Bauraums für die Leiterplatte ist die beschriebene Lösung insbesondere für Schraubenmuttern, d. h. für Grundkörper von Schraubenmuttern, größer oder gleich M10 geeignet. Zur Miniaturisierung der Baugröße und zur Erhöhung der Robustheit sind vorteilhafterweise alle Bauteile auf der Leiterplatte einseitig und mittels SMD (surface-mounted-device) und/oder Flipchip-Montage und/oder COB-Montage (Chip-on-Board-Technologie) bestückt. Eine Lage der elektronischen Bauteile auf der ringförmigen Leiterplatte ist dabei relativ frei wählbar. Daher ist diese Lage der elektronischen Bauteile auf der Leiterplatte vorteilhafterweise hinsichtlich Störfestigkeit und/oder Fertigungskosten optimiert.

Zusätzlich dient diese ringförmige Leiterplatte als Träger für die Antenne zur elektromagnetischen Kopplung mit dem RFID-Lesegerät. Die Antenne ist vorteilhafterweise auf der Leiterplatte als Spule, insbesondere als gedruckte Spule (printed antenna), ausgeführt. Eine Anzahl von Windungen dieser Spule, d. h. der Antenne, ist im Wesentlichen abhängig von der jeweils verwendeten RFID-Trägerfrequenz und der Größe des Grundkörpers der Schraubenmutter. Insbesondere wird die Windungszahl durch eine für die Resonanz erforderliche Induktivität bestimmt. Beispielsweise ist bei Hochfrequenz-Transpondern eine Windungszahl von 2 bis 20 sinnvoll. Beispielsweise liegt die Windungszahl bei zehn Windungen oder ca. zehn Windungen.

Des Weiteren dient die Leiterplatte der elektrischen Kontaktierung des mindestens einen oder des jeweiligen, vorteilhafterweise an der Seitenfläche des Grundkörpers der Schraubenmutter angeordneten, insbesondere als DMS-Sensor ausgebildeten, Verformungserfassungssensors, beispielsweise mittels Löten, Kleben oder Drahtbonden. Elektrische Leiterzüge zwischen dem mindestens einen Verformungserfassungssensor oder den mehreren Verformungserfassungssensoren und dem Analog-Digital-Wandler oder den mehreren Analog-Digital-Wandlern sind zur Verbesserung der Störfestigkeit vorteilhafterweise möglichst kurz ausgebildet, verlaufen vorteilhafterweise parallel und sind vorteilhafterweise durch in der Leiterplatte darüber und darunter liegende Kupferflächen geschirmt ausgeführt. Die beschriebene Mehrfachfunktion der Leiterplatte führt zu einer erheblichen Reduzierung der Baugröße und der Kosten für das Sensormodul und damit der hier beschriebenen Schraubenmutter.

Die hier beschriebene Schraubenmutter ist somit als eine Messmutter ausgebildet, welche vorteilhafterweise aus dem Grundkörper, welcher die eigentliche, vorteilhafterweise herkömmliche, Schraubenmutter bildet, und dem Sensormodul besteht. Das Sensormodul besteht vorteilhafterweise aus dem mindestens einen, vorteilhafterweise als DMS-Sensor ausgebildeten, Verformungserfassungssensor oder mehreren solchen Verformungserfassungssensoren, insbesondere montiert an einer Seitenfläche oder jeweils einer Seitenfläche des Grundkörpers der Schraubenmutter, der Leiterplatte und vorteilhafterweise einer Schutzumhüllung, d. h. der Schutzhülle, um das Sensormodul, insbesondere um den mindestens einen Verformungserfassungssensor oder um die mehreren Verformungserfassungssensoren und um die Leiterplatte, insbesondere auch um die darauf angeordneten Bauteile. Der gesamte Aufbau der hier beschriebenen Schraubenmutter ist vorteilhafterweise in einer monolithischen Bauweise ausgeführt, um im Ergebnis ein robustes, flexibel einsetzbares und kontaktlos arbeitendes Messmittel für die Anwendung der Vorspannungsmessung in Schraubverbindungen zu erhalten.

Die hier beschriebene Schraubenmutter ist vorteilhafterweise wie eine standardmäßige Schraubenmutter ohne grundsätzliche Einbußen in der Stabilität als Objekt zum Festziehen von Schraubverbindungen geeignet, da, zumindest in einigen vorteilhaften Ausführungsformen, als Grundkörper vorteilhafterweise eine originale Schraubenmutter ohne Änderungen ihres Aufbaus verwendet wird, vorteilhafterweise zumindest in den Ausführungsformen, die keine Kavität oder Axialbohrung für den jeweiligen Verformungserfassungssensor aufweisen.

Die beschriebene Ausführung als ringförmige Leiterplatte mit einer gedruckten ringförmigen Antenne, welche die Schrauböffnung des Grundkörpers der Schraubenmutter und, wenn die Schraubenmutter auf die Schraube oder Gewindestange oder den Gewindebolzen aufgeschraubt ist, auch diese Schraube oder Gewindestande oder den Gewindebolzen, wenn diese bzw. dieser durch die Schrauböffnung hindurchragt, umschließt, führt zu einem, zumindest näherungsweisen, rotationssymmetrischen Aufbau, insbesondere bezüglich der Antenne, so dass das Sensormodul und damit die hier beschriebene Schraubenmutter, welche die Messmutter bildet, kontaktlos richtungsunabhängig ausgelesen werden kann. Dadurch wird eine Auslesbarkeit nur aus einer Vorzugsrichtung vermieden. Diese Eigenschaft ist für die Anwendung der Schraubenmutter zur Messung der Vorspannkraft von besonderer Bedeutung, da bei Festziehen der Schraubverbindung nicht vorhersehbar ist, bei welchem Drehwinkel die erforderliche Vorspannkraft erreicht wird und bei welchem Winkel somit die Sensormesswerte ausgelesen werden können. Diese Richtungsunabhängigkeit erleichtert somit die Anwendung der hier beschriebenen Schraubenmutter zur Messung der Vorspannkraft erheblich.

Für ein Anziehen der Schraubverbindung, insbesondere der Schraubenmutter, werden üblicherweise Maulschlüssel, Ringschlüssel oder ähnliche Werkzeuge verwendet, welche hierfür mit der Schraubenmutter in Kontakt gebracht werden müssen und zum Festziehen eine erhebliche Kraftwirkung auf die Schraubenmutter hervorrufen. Um weiterhin eine praktikable und sichere Verwendung dieser Werkzeuge zu ermöglichen, ist daher der mindestens eine oder der jeweilige Verformungserfassungssensor an einer geeigneten Position und mit möglichst geringer Bauhöhe am Grundkörper montiert, und vorteilhafterweise ist die Schutzumhüllung, d. h. die Schutzhülle, zu dessen Schutz vorgesehen, beispielsweise in Form einer Vergussschicht oder eines Gehäuses, so dass der zumindest eine oder der jeweilige Verformungserfassungssensor vor möglichen Belastungen oder Beschädigungen durch diese Werkzeuge geschützt ist.

Wie bereits beschrieben, kann bei der Montagevorrichtung, umfassend die Schraubenmutter und den Schraubenschlüssel oder ein anderes geeignetes Werkzeug, vorgesehen sein, dass die Form des zu verwendenden Werkzeugs, insbesondere des Schraubenschlüssels, in geeigneter Weise modifiziert ist, um ein einfaches Handling sicherzustellen und mögliche Beschädigungen zu vermeiden. Diese Modifikation kann beispielweise in einer oder mehreren Ausbuchtungen in hinteren Backen des Schraubenschlüssels bestehen. Die Schraubenmutteraufnahme des Schraubenschlüssels weist somit vorteilhafterweise mindestens eine Ausnehmung zur Aufnahme des mindestens einen Verformungserfassungssensors der Schraubenmutter auf, wobei diese mindestens eine Ausnehmung korrespondierend zum über die Oberfläche des Grundkörpers der Schraubenmutter überstehenden Bereich des mindestens einen Verformungserfassungssensors ausgebildet ist. Dadurch ist beispielsweise auch eine sichere Anwendung eines Maulschlüssels auch bei zwei gegenüberliegend am Grundkörper montierten Verformungserfassungssensoren möglich.

Vorteilhafterweise steht die Leiterplatte inklusive der Schutzhülle, beispielsweise in Form eines Gehäuses oder einer schützenden Umhüllung, zum Beispiel in Form eines Vergusses, nicht über eine Kontur des Grundkörpers, bei einer Sechskantmutter über die sechseckige Kontur, im Bereich des mindestens einen oder des jeweiligen Verformungserfassungssensors zumindest nicht weiter über als dieser Verformungserfassungssensor oder der jeweilige Verformungserfassungssensor über die Kontur übersteht. Auch dadurch werden mögliche Beschädigungen durch einen verwendeten Schraubenschlüssel vermieden.

Eine Bauhöhe der, insbesondere umhüllten, Leiterplatte ist möglichst gering, beispielsweise liegt sie im Bereich von wenigen Millimetern, zum Beispiel im Bereich von 1 mm bis 10 mm. Durch die beschriebene Bauweise wird insgesamt ein guter Schutz des Sensormoduls inklusive des mindestens einen, insbesondere als DMS-Sensor ausgebildeten, Verformungserfassungssensors oder des jeweiligen solchen Verformungserfassungssensors vor Beschädigung bei einem Handling, insbesondere bei einem Festschrauben oder Losschrauben der Schraubenmutter, mit dem Schraubenschlüssel erreicht.

Vorteilhafterweise unterscheidet sich somit die Montage der hier beschriebenen Schraubenmutter hinsichtlich des zu verwendenden Werkzeugs und Aufwands nicht wesentlich gegenüber der Montage einer vergleichbaren herkömmlichen Schraubenmutter ohne Sensormodul. Die Montage erfolgt damit weiterhin sehr einfach, zuverlässig und kostengünstig, zum Beispiel mit einem Schraubenschlüssel.

Wie bereits erwähnt, kann in einer möglichen Ausführungsform vorgesehen sein, dass der mindestens eine Verformungserfassungssensor in einer Kavität angeordnet ist, welche in einer Seitenfläche des Grundkörpers ausgebildet ist, oder der jeweilige Verformungserfassungssensor in jeweils einer Kavität angeordnet ist, welche in jeweils einer Seitenfläche des Grundkörpers ausgebildet ist. Die Kavität oder die jeweilige Kavität ist somit eine Vertiefung in der Seitenfläche des Grundkörpers der Schraubenmutter. Dadurch wird ein weiter verbesserter Schutz des mindestens einen oder des jeweiligen Verformungserfassungssensors erreicht.

Die Kavität oder die jeweilige Kavität ist dabei vorteilhafterweise bis zur Leiterplatte ausgebildet, um auch Zuleitungen zum Verformungserfassungssensor oder zum jeweiligen Verformungserfassungssensor, d. h. Verbindungsleitungen zwischen der Leiterplatte und dem mindestens einen oder dem jeweiligen Verformungserfassungssensor, zu schützen.

Die Kavität oder die jeweilige Kavität ist vorteilhafterweise derart ausgebildet, insbesondere derart tief in den Grundkörper hinein ausgebildet, dass der mindestens eine oder der jeweilige Verformungserfassungssensor inklusive der Zuleitungen bündig in die Seitenfläche oder in die jeweilige Seitenfläche des Grundkörpers der Schraubenmutter verbaut ist. Dadurch können Beschädigung durch den Schraubenschlüssel ausgeschlossen oder zumindest nahezu ausgeschlossen werden, beispielsweise auch dann, wenn ein normaler Schraubenschlüssel verwendet wird, der keine spezielle Ausnehmung zur Aufnahme des mindestens einen oder des jeweiligen Verformungserfassungssensors aufweist.

Wie bereits erwähnt, ist in einer möglichen Ausführungsform der Montagevorrichtung vorgesehen, dass ein RFID-Lesegerät fest mit dem Schraubenschlüssel verbunden ist oder lösbar mit dem Schraubenschlüssel verbindbar oder verbunden ist. Dadurch wird es ermöglicht, dass auch während eines Anziehens der Schraubenmutter ständig die Vorspannkraft ermittelt und angezeigt werden kann. Das RFID-Lesegerät weist zur Messwertanzeige der ermittelten Vorspannkraft beispielsweise eine Anzeigeeinheit, insbesondere ein Display, auf. Alternativ oder zusätzlich kann beispielsweise vorgesehen sein, dass die ermittelten Messwerte zur Vorspannkraft über eine Leitung oder drahtlos, beispielsweise über Bluetooth oder andere drahtlose Kommunikationstechnologien, zu einem weiteren Gerät, beispielsweise einem Mobiltelefon, insbesondere Smartphone, und/oder zu einem tragbaren Computer, insbesondere Tablet oder Notebook, übertragen und dort angezeigt und/oder gespeichert werden. Das RFID-Lesegerät weist in diesem Fall eine entsprechende drahtgebundene oder drahtlose Datenübertragungsschnittstelle auf. Alternativ oder zusätzlich kann beispielsweise auch das RFID-Lesegerät einen Speicher zur Speicherung der ermittelten Messwerte der Vorspannkraft aufweisen.

Ein wesentlicher Vorteil der Ermittlung der Vorspannkraft der Schraubverbindung an der Schraubenmutter, welches mit der hier beschriebenen Schraubenmutter ermöglicht wird, ist, dass es sich bei der herkömmlichen Schraubenmutter und somit auch bei dem Grundkörper der hier beschriebenen Schraubenmutter vorteilhafterweise um ein kostengünstiges Bauteil handelt, welches in standardisierten Baugrößen und Bauformen angeboten wird, und dass eine Produktvariabilität im Vergleich zu Schrauben deutlichen geringer ist. Damit können beispielsweise herkömmliche Schraubenmuttern als Grundkörper für die hier beschriebene, als Sensormutter ausgebildete, Schraubenmutter verwendet werden, welche dann entsprechend dem hier beschriebenen Aufbau mit dem Sensormodul, insbesondere mit einem oder mehreren, insbesondere als DMS-Sensor ausgebildeten, Verformungserfassungssensor versehen werden. Dies ermöglicht eine kostengünstige Herstellung in größeren Serien, insbesondere im Vergleich zu Schrauben oder gar Spezialschrauben.

Gegenüber anderen möglichen Lösungen gestattet die Ermittlung der in einer Schraubverbindung wirkenden Vorspannkraft mit einer mit dem hier beschriebenen Sensormodul versehenen Schraubenmutter eine effektiven Massenfertigung, Lagerhaltung und Vermarktung dieser als Sensormutter ausgebildeten Schraubenmutter, insbesondere bezüglich standardisierter Schraubenmuttern.

Zusätzlich ist ein Austausch der Schraubenmutter, zum Beispiel bei einem Ausfall und/oder zur Durchführung einer Rekalibrierung des mindestens einen oder des jeweiligen Verformungserfassungssensors, wesentlich einfacher möglich als ein Austausch anderer Komponenten der Schraubverbindung, beispielsweise der Schraube oder des Gewindebolzens, ab welchen die Anordnung solcher Sensoren ebenfalls denkbar wäre.

In einer möglichen Ausführungsform ist vorgesehen, dass das Sensormodul, zusätzlich zu dem mindestens einen Verformungserfassungssensor oder den mehreren Verformungserfassungssensoren, insbesondere ausgebildet als DMS-Sensor, einen oder mehrere weitere Sensoren aufweist. Dieser weitere Sensor oder die mehreren weiteren Sensoren wird/werden dann als Bestandteil des Sensormoduls ebenfalls mittels der RFID-Technologie betrieben und ausgelesen, auf analoge Weise wie der mindestens eine oder der jeweilige Verformungserfassungssensor.

Beispielsweise ist/sind ein Temperatursensor oder mehrere Temperatursensoren auf der Leiterplatte des Sensormoduls und/oder im Bereich, insbesondere in unmittelbarer Umgebung, des mindestens einen oder des jeweiligen Verformungserfassungssensors angeordnet. Eine mit diesem Temperatursensor oder mit dem jeweiligen Temperatursensor ermittelte Temperatur kann dann beispielweise für eine Temperaturkompensation der mit dem mindestens einen oder dem jeweiligen Verformungserfassungssensor gemessenen Signale verwendet werden.

Alternativ oder zusätzlich kann das Sensormodul beispielsweise einen oder mehrere dreidimensionale Beschleunigungssensoren, insbesondere auf MEMS-Basis, aufweisen. Der mindestens eine oder der jeweilige Beschleunigungssensor ist vorteilhafterweise auf der Leiterplatte, insbesondere auf der FR4-Leiterplatte, angeordnet und kann insbesondere, selbst geringfügige, Lageänderungen des Sensormoduls und damit des Messobjektes, insbesondere der Schraubenmutter, detektieren. Diese Informationen können insbesondere bei bewegbaren Messobjekten, wobei es sich ja bei Schraubenmuttern handelt, relevant sein. Alternativ oder zusätzlich gestatten solche Sensoren, insbesondere MEMS-Sensoren, beispielsweise auch eine Ermittlung von Beschleunigungen und/oder Schwingungen. Alternativ oder zusätzlich kann beispielsweise auch ein solcher Sensor, insbesondere MEMS-Sensor, mit mindestens einem zusätzlichen Sensor zur Ermittlung einer Winkelgeschwindigkeit und/oder Magnetfeldstärke, insbesondere auch des Erdmagnetfeldes vorgesehen sein.

Da größere Metallflächen in der unmittelbaren Umgebung einer Spule im Allgemeinen zu einer Beeinflussung dieser Spule hinsichtlich ihrer Induktivität und ihrer Güte führen, trifft dies auch auf die Antenne, welche vorteilhafterweise als Spule, insbesondere gedruckte Spule, auf der Leiterplatte des Sensormoduls ausgebildet ist, zu. Da diese Antenne für die Kopplung mit dem RFID-Lesegerät vorgesehen ist und verwendet wird, bildet sie zusammen mit einer Kapazität einen Parallelschwingkreis. Sind die Schraube oder der Gewindebolzen und beispielsweise eine verwendete Unterlegscheibe aus Metall ausgebildet, wird durch dieses Metall, insbesondere aufgrund von darin auftretenden Wirbelstromverlusten sowie gegebenenfalls verwendeten permeablen Materialien, beispielsweise Stahl, die Resonanzfrequenz des Schwingkreises verstimmt und die Güte des Schwingkreises wesentlich reduziert. Dies führt zu einer negativen Beeinflussung der Energie- und Datenübertragung über die RFID-Kopplung des Sensormoduls, insbesondere der RFID-Transpondereinheit, mit dem RFID-Lesegerät. Die auftretende Verstimmung der Resonanzfrequenz kann durch einen entsprechenden Abgleich korrigiert werden. Zur Vermeidung einer zu starken Reduzierung der Güte des Schwingkreises durch das Metall und damit des maximal möglichen Leseabstandes für das RFID-Lesegerät ist vorteilhafterweise ein vorgegebener Mindestabstand der die Antenne bildenden Spule auf der Leiterplatte zum Grundkörper der Schraubenmutter und zu dessen innen liegenden Gewinde vorgesehen. Dieser Mindestabstand beträgt beispielsweise 1 mm. D. h. die Antenne des Sensormoduls, insbesondere der RFID-Transpondereinheit, weist vorteilhafterweise einen Mindestabstand von 1 mm zum Grundkörper und/oder zu dessen Schrauböffnung auf, insbesondere zum Gewinde in der Schrauböffnung. Die Antenne ist somit entsprechend ausgebildet und angeordnet. Insbesondere ist die Antenne auf der Leiterplatte entsprechend ausgebildet und angeordnet und die Leiterplatte ist am Grundkörper entsprechend angeordnet, um dies sicherzustellen.

Die Antenne auf der Leiterplatte des Sensormoduls, insbesondere die als Spule ausgebildete Antenne, insbesondere deren Design, ist somit vorteilhafterweise derart ausgestaltet, dass die Windungen der Spule auf der ringförmigen Leiterplatte vorteilhafterweise möglichst weit außen liegen und vorteilhafterweise möglichst auf einer Schicht der Leiterplatte, auch als Layer bezeichnet, angeordnet sind, welche sich am weitesten entfernt vom Grundkörper befindet, d. h. den größten Abstand zum Grundkörper aufweist. Auch können die Windungen auf einer beispielsweise nächstfolgend unterhalb der am weitesten entfernten Schicht positionierten Schicht angeordnet sein, beispielsweise dann, wenn Spulen mit vielen Windungen verwendet werden. Ferner ist es möglich, dass Windungen auf mehreren Schichten der Leiterplatte angeordnet sind.

In einer möglichen Ausführungsform kann beispielsweise vorgesehen sein, dass der Abstand zwischen der Leiterplatte und dem, insbesondere aus Metall ausgebildeten, Grundkörper der Schraubenmutter durch eine dazwischen liegende nicht elektrisch leitfähige Schicht vergrößert ist. D. h. bei dieser Ausführungsform ist zwischen der Leiterplatte und dem Grundkörper eine solche nicht elektrisch leitfähige, insbesondere elektrisch isolierende, Schicht angeordnet. Alternativ ist diese Schicht zwischen der Leiterplatte und dem Grundkörper der Schraubenmutter beispielsweise aus einem permeablen Material ausgebildet, welches durch Verzerrung der Feldlinien eine wirksame Reduzierung der im Metall induzierten Wirbelströme erzeugen kann. Das für diese Schicht verwendete permeable Material ist dabei vorteilhafterweise derart ausgewählt, dass es auch bei einer Frequenz von 13,56 MHz (der bevorzugten von der RFID-Transpondereinheit und vom RFID-Lesegerät verwendeten Frequenz) noch keine zu großen Verluste aufweist. Hergestellt werden kann dieses Material beispielweise durch Beimischung eines entsprechend geeigneten Ferritpulvers in einen flexiblen Kunststoff.

Die Nutzung der RFID-Technologie bietet neben der Realisierung der beschriebenen Ermittlungsfunktion, insbesondere bezüglich der Vorspannkraft, wesentliche weitere Vorteile. Insbesondere ist die Verwendung eines nichtflüchtigen Datenspeichers der RFID-Transpondereinheit für eine Speicherung von Informationen wie beispielsweise Identifikationsnummer, Kalibrierdaten der Sensoren des Sensormoduls, Hersteller- und Typangaben der als Sensormutter ausgebildeten Schraubenmutter und/oder Nutzungsdaten sehr vorteilhaft möglich. Grundsätzlich bietet die RFID-Technologie durch meist implementierte Antikollisionsalgorithmen auch die Möglichkeit zum parallelen Messen und Auslesen mehrerer auf die oben beschriebene Weise als Sensormutter ausgebildeten Schraubenmuttern, welche sich gleichseitig im elektromagnetischen Feld des RFID-Lesegerätes befinden. Wird als RFID-Technologie deren spezielle Ausführung NFC (Near Field Communication) verwendet, so können des Weiteren die ermittelten Messdaten beispielsweise mit einem Mobiltelefon, insbesondere Smartphone mit NFC-Schnittstelle oder mit anderen Geräten mit NFC-Schnittstelle, ausgelesen werden und bei Übermittlung beispielsweise als NDEF-Nachricht besonders einfach angezeigt und verarbeitet werden. In einer möglichen Ausführungsform ist somit die RFID-Transpondereinheit des Sensormoduls als eine NFC-Transpondereinheit ausgebildet und das RFID-Lesegerät ist als ein NFC-Lesegerät ausgebildet, beispielsweise als ein Mobiltelefon, insbesondere Smartphone, oder als ein tragbarer Computer, beispielsweise Tablet oder Notebook, mit einer NFC-Schnittstelle.

In einer möglichen Ausführungsform kann beispielsweise vorgesehen sein, dass der Grundkörper der Mutter in Axialrichtung länger, d. h. größer, ist als eine vergleichbare standardisierte Schraubenmutter. Dadurch wird die Messgenauigkeit bezüglich der Vorspannkraft verbessert. Bei standardisierten herkömmlichen als Sechskantmutter ausgebildeten Schraubenmuttern beträgt deren Höhe, d. h. deren Größe in Axialrichtung, üblicherweise ca. die Hälfte der Schlüsselweite. Die Schlüsselweite bezieht sich dabei auf den für die Schraubenmutter zur Verwendung vorgesehenen Schraubenschlüssel. Bei der hier beschriebenen Ausführungsform ist der Grundkörper somit vorteilhafterweise in Axialrichtung, d. h. bezüglich seiner Höhe, größer, d. h. größer als die Hälfte der Schlüsselweite, insbesondere wesentlich größer. Beispielsweise entspricht diese Höhe des Grundkörpers mindestens zwei Dritteln oder drei Vierteln oder vier Fünfteln der Schlüsselweite oder mindestens der Schlüsselweite.

In einer möglichen Ausführungsform kann vorgesehen sein, dass eine zusätzliche Kennzeichnung der zugehörigen Schraube/des Gewindebolzens und/oder der verschraubten Bauteile der Schraubverbindung mit einem Transponder und/oder mit einem Matrix- oder Barcode vorgesehen sein, um die Messstelle zu kennzeichnen, an der sich die Schraubenmutter befindet. Dadurch wird beispielsweise vermieden, dass bei einem Austausch der Schraubenmutter keine Zuordnung zum Ort der Messung der Vorspannkraft besteht. Die durch die als Sensormutter ausgebildete Schraubenmutter ermittelten Messwerte werden vorteilhafterweise mit einer ID-Nummer der Schraubenmutter, die vorteilhafterweise in deren RFID-Transpondereinheit gespeichert ist, verknüpft abgespeichert. Ist die oben beschriebene Kennzeichnung der Messstelle vorgesehen, wird es somit ermöglicht, diese Messwerte zusätzlich auch mit dieser Kennzeichnung der Messstelle, d. h. mit einer entsprechenden Identifikationsinformationen der Messstelle, zu verbinden und dies zusammen zu speichern. Dadurch wird eine eindeutige Zuordnung der ermittelten Messwerte, insbesondere bezüglich der Vorspannkraft, zur Schraubenmutter und zur Messstelle ermöglicht.

Wie bereits oben erwähnt, kann in einer möglichen Ausführungsform vorgesehen sein, dass der mindestens eine oder der jeweilige Verformungserfassungssensor in einer Axialbohrung im Bereich einer Kante zwischen zwei aneinander angrenzenden Seitenflächen im Grundkörper angeordnet ist. Dies ist eine andere Möglichkeit der, insbesondere geschützten, Anordnung des mindestens einen oder jeweiligen Verformungserfassungssensors. Des Weiteren wird dadurch eine besonders gute Kopplung mit dem Grundkörper zur Erfassung seiner mit der Vorspannkraft korrespondierenden Verformung ermöglicht.

In einer möglichen Ausführungsform kann vorgesehen sein, dass das gesamte Sensormodul, d. h. inklusive der Leiterplatte mit Antenne und RFID-Transpondereinheit und natürlich inklusive des mindestens einen Verformungserfassungssensors, an einer Seitenfläche des Grundkörpers der Schraubenmutter angeordnet ist. Dadurch wird zwar die Messung und insbesondere das Auslesen mittels des RFID-Lesegeräts nur an einer Stelle ermöglicht, zudem ist die Ermittlung der Vorspannkraft dadurch ungenauer und eine seitliche Bauhöhe der Schraubenmutter im Bereich des Sensormoduls ist größer, jedoch ist diese Ausführungsform besonders kostengünstig. Insbesondere aufgrund der größeren seitlichen Bauhöhe, d. h. der größeren Ausdehnung in Radialrichtung der Schraubenmutter im Bereich des Sensormoduls, ist diese Ausführungsform vorteilhafterweise für größere Grundkörper, beispielsweise ab dem Maß M18, geeignet.

Alternativ zur oben beschriebenen Schraubenmutter kann beispielsweise auch vorgesehen sein, dass das oben beschriebene und dort für die Schraubenmutter verwendete Sensormodul auf einem Schraubenkopf einer Schraube angeordnet ist. Dadurch ist somit eine Sensorschraube ausgebildet, umfassend einen Schraubengrundkörper und das Sensormodul. Der mindestens eine oder der jeweilige Verformungserfassungssensor ist dann auf dem Schraubenkopf, insbesondere an einer jeweils geeigneten Stelle und mit geeigneter Ausrichtung, oder an jeweils einer Seitenfläche des Schraubenkopfes angeordnet, auf gleiche Weise wie bei der oben beschriebenen Schraubenmutter. Alternativ kann der Verformungserfassungssensor beispielsweise rotationssymmetrisch auf dem Schraubenkopf angeordnet sein, wobei dieser Verformungserfassungssensor dann vorteilhafterweise durch seine Struktur über unsymmetrisch anliegende Kräfte integriert. Dadurch ist nur ein, insbesondere als DMS-Sensor ausgebildeter, Verformungserfassungssensor erforderlich.

Ausführungsbeispiele der Erfindung werden im Folgenden anhand von Zeichnungen näher erläutert. Darin zeigen:
- Figur 1: schematisch eine perspektivische Darstellung einer Ausführungsform einer Schraubenmutter,
- Figur 2: schematisch eine Ermittlung einer Vorspannkraft einer Schraubverbindung,
- Figur 3: schematisch ein Sensormodul,
- Figur 4: schematisch eine Draufsicht auf eine Stirnseite einer Ausführungsform einer Schraubenmutter,
- Figur 5: schematisch eine Seitenansicht einer Ausführungsform einer Schraubenmutter mit einem im Schnitt dargestellten Sensormodul der Schraubenmutter,
- Figur 6: schematisch einen Ausschnitt einer Längsschnittdarstellung einer Ausführungsform einer Schraubenmutter,
- Figur 7: schematisch einen Ausschnitt einer Längsschnittdarstellung einer weiteren Ausführungsform einer Schraubenmutter,
- Figur 8: schematisch eine Montagevorrichtung,
- Figur 9: schematisch einen Ausschnitt einer Seitenansicht einer Ausführungsform einer Schraubenmutter, und
- Figur 10: schematisch einen Ausschnitt einer Längsschnittdarstellung der Ausführungsform der Schraubenmutter gemäß Figur 9.

Einander entsprechende Teile sind in allen Figuren mit den gleichen Bezugszeichen versehen.

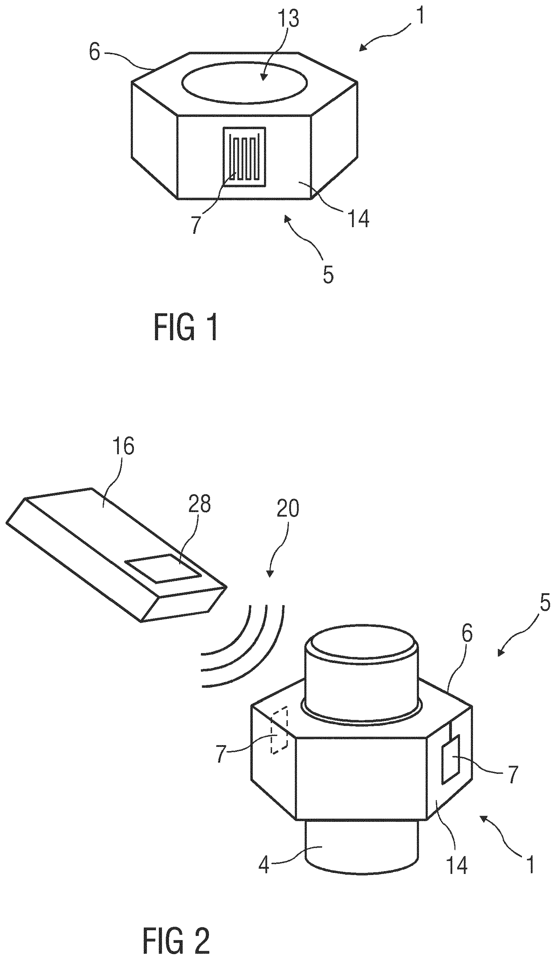

Anhand der Figuren 1 bis 10 werden im Folgenden eine Schraubenmutter 1 und eine Montagevorrichtung 2 mit einer solchen Schraubenmutter 1 und einem Schraubenschlüssel 3 beschrieben. Mit der Schraubenmutter 1 ist eine Schraubverbindung herstellbar, indem diese Schraubenmutter 1, insbesondere mittels des Schraubenschlüssels 3, beispielsweise auf eine Schraube 4, auf eine Gewindestange oder auf einen Gewindebolzen aufgeschraubt wird.

Die Schraubenmutter 1 umfasst in allen dargestellten Ausführungsformen ein Sensormodul 5 zur Ermittlung einer Vorspannkraft der Schraubverbindung. Die hier beschriebene Schraubenmutter 1 ist somit als eine Sensormutter ausgebildet, welche einen Grundkörper 6 als eigentliche Mutter und zusätzlich das Sensormodul 5 umfasst, dass an diesem Grundkörper 6 angeordnet ist.

Das Sensormodul 5 umfasst mindestens einen am Grundkörper 6 der Schraubenmutter 1 angeordneten Verformungserfassungssensor 7 zur Erfassung einer Verformung des Grundkörpers 6 der Schraubenmutter 1 oder mehrere solche Verformungserfassungssensoren 7, in den hier gezeigten beispielhaften Ausführungsformen vorteilhafterweise jeweils zwei solche Verformungserfassungssensoren 7, und eine RFID-Transpondereinheit 8. Eine Leiterplatte 9 des Sensormoduls 5, auf welcher eine Antenne 10 der RFID-Transpondereinheit 8 und eine elektronische Schaltung des Sensormoduls 5 ausgebildet ist und auf welcher vorteilhafterweise die gesamte RFID-Transpondereinheit 8 angeordnet ist, und welche mit dem jeweiligen Verformungserfassungssensor 7 elektrisch leitfähig gekoppelt ist, ist an einer Stirnseite 11 des Grundkörpers 6 angeordnet, insbesondere auf der Stirnseite 11, insbesondere auf einer Fläche dieser Stirnseite 11, vorteilhafterweise nur auf der Fläche dieser Stirnseite 11, insbesondere diese Fläche nach innen, in Richtung einer Schrauböffnung 13 des Grundkörpers 6, nicht überragend. Sie kann dabei direkt auf der Stirnseite 11 aufliegen oder davon beabstandet sein, ist jedoch vorteilhafterweise stets an der Stirnseite 11 befestigt, d. h. insbesondere mit der Stirnseite 11 verbunden.

Die hier beschriebene als Sensormutter ausgebildete Schraubenmutter 1 ist somit eine telemetrische Schraubenmutter 1, welche eine kontaktlose Messung der Vorspannkraft in der mittels der Schraubenmutter 1 herzustellenden oder hergestellten Schraubverbindung ermöglicht.

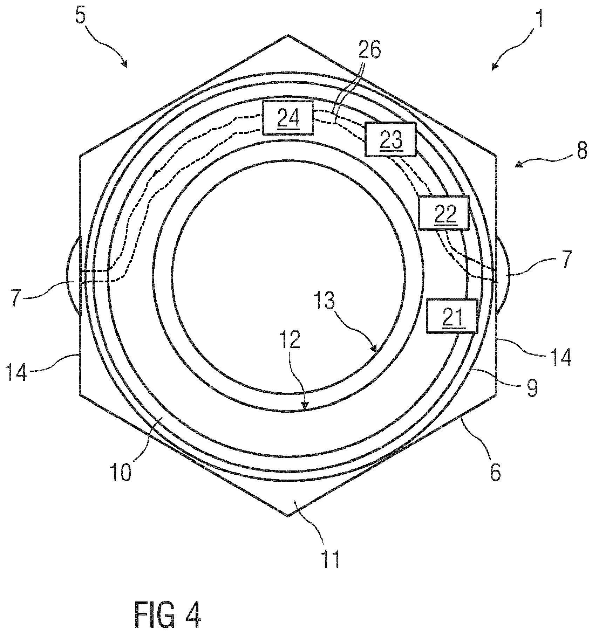

Erfindungsgemäß ist die Leiterplatte 9 ringförmig ausgebildet, insbesondere kreisrund oder elliptisch, wie insbesondere in Figur 4 erkennbar. Auch kann die ringförmige Leiterplatte eine sechseckige Außenkontur aufweisen. Dabei ist erfindungsgemäß eine lichte Weite einer Durchführungsöffnung 12 der Leiterplatte 9 und zweckmäßigerweise auch des gesamten Sensormoduls 5 mindestens so groß wie eine lichte Weite der Schrauböffnung 13 des Grundkörpers 6 der Schraubenmutter 1, vorteilhafterweise größer als die lichte Weite der Schrauböffnung 13, wie in Figur 4 gezeigt. Hier ist die Leiterplatte 9 ringförmig rund ausgebildet, so dass ein Durchmesser der Durchführungsöffnung 12 der Leiterplatte 9 größer ist als ein Durchmesser der Schrauböffnung 13 des Grundkörpers 6 der Schraubenmutter 1. Vorteilhafterweise ist auch das gesamte Sensormodul 5 entsprechend der Leiterplatte 9 ausgebildet, d. h. insbesondere ringförmig und rund.

In den hier gezeigten Ausführungsformen ist der jeweilige

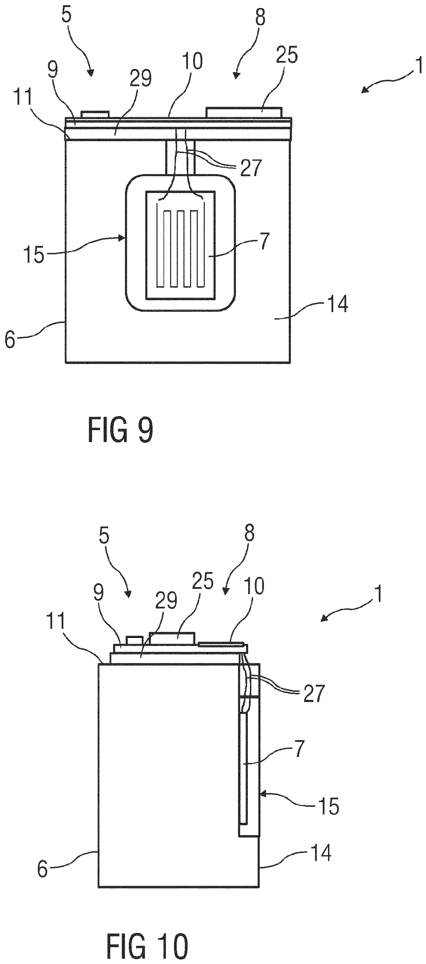

Verformungserfassungssensor 7 im Bereich einer Außenumfangsseite des Grundkörpers 6 angeordnet, beispielsweise auf einer Seitenfläche 14, wie in den Figuren 1 und 2 sowie 4 bis 8 gezeigt, oder in einer Kavität 15, welche in einer Seitenfläche 14 ausgebildet ist, wie in den Figuren 9 und 10 gezeigt, oder in einer Axialbohrung im Bereich einer Kante zwischen zwei aneinander angrenzenden Seitenflächen 14. In den hier dargestellten Beispielen ist der Grundkörper 6 als eine Sechskantschraube ausgebildet und weist somit sechs Seitenflächen 14 und sechs Kanten auf, wobei die jeweilige Kante zwischen zwei angrenzenden Seitenflächen 14 ausgebildet ist.

Mittels des jeweiligen Verformungserfassungssensors 7 wird vorteilhafterweise eine in Axialrichtung des Grundkörpers 6 der Schraubenmutter 1 auftretende Dehnung und/oder Stauchung, d. h. negative Dehnung des Grundkörpers 6 der Schraubenmutter 1 ermittelt. Derartige Dehnungen und/oder Stauchungen korrelieren während der Herstellung der Schraubverbindung durch Aufschrauben der Schraubenmutter 1 auf die Schraube 4, Gewindestange oder den Gewindebolzen und bei hergestellter Schraubverbindung mit der Vorspannkraft, so dass aus dieser mittels des jeweiligen Verformungserfassungssensors 7 ermittelten Dehnung und/oder Stauchung die Vorspannkraft ermittelt werden kann. Die Axialrichtung ist dabei die Richtung parallel zu einer Rotationsachse des Grundkörpers 6 der Schraubenmutter 1, insbesondere parallel zu einer Rotationsachse der Schrauböffnung 13 im Grundkörper 6, um welche die Schraubenmutter 1 zur Herstellung der Schraubverbindung gedreht wird und dadurch auf die Schraube 4, Gewindestange oder auf den Gewindebolzen aufgeschraubt wird. Der jeweilige Verformungserfassungssensor 7 ist somit vorteilhafterweise entsprechend ausgebildet und am Grundkörper 6 angeordnet, um dies zu ermöglichen.

Die Verformungserfassungssensoren 7 sind vorteilhafterweise um einen Außenumfang des Grundkörpers 6 gleichmäßig verteilt am Grundkörper 6 der Schraubenmutter 1 angeordnet. Bei den hier dargestellten zwei Verformungserfassungssensoren 7 sind diese vorteilhafterweise sich gegenüberliegend am Grundkörper 6 angeordnet, wie in den Figuren 2, 4, 5 und 8 gezeigt.

Der jeweilige Verformungserfassungssensor 7 ist zweckmäßigerweise als ein Sensor zur Erfassung von Dehnungen, von Stauchungen, d. h. von negativen Dehnungen, und/oder von Scherkräften ausgebildet, insbesondere als ein Dehnungssensor, insbesondere als ein Dehnmessstreifensensor.

Es kann, insbesondere bei den hier dargestellten Ausführungsformen, vorgesehen sein, dass die RFID-Transpondereinheit 8 einen Energiespeicher, insbesondere einen Kondensator, aufweist. Dadurch wird es insbesondere ermöglicht, von einem RFID-Lesegerät 16 auf die RFID-Transpondereinheit 8 übertragene elektrische Energie zu speichern, insbesondere zumindest kurzzeitig zwischenzuspeichern, um danach ohne Verbindung zum RFID-Lesegerät 16 eine Ermittlung der Vorspannkraft durchführen zu können, wobei das Sensormodul 5 mit dieser im Energiespeicher gespeicherten elektrischen Energie betrieben wird.

Die Antenne 10 des Sensormoduls 5, insbesondere der RFID-Transpondereinheit 8, ist vorteilhafterweise als eine Spule, insbesondere als eine gedruckte Spule, auf der Leiterplatte 9 ausgebildet, wie in Figur 4 gezeigt.

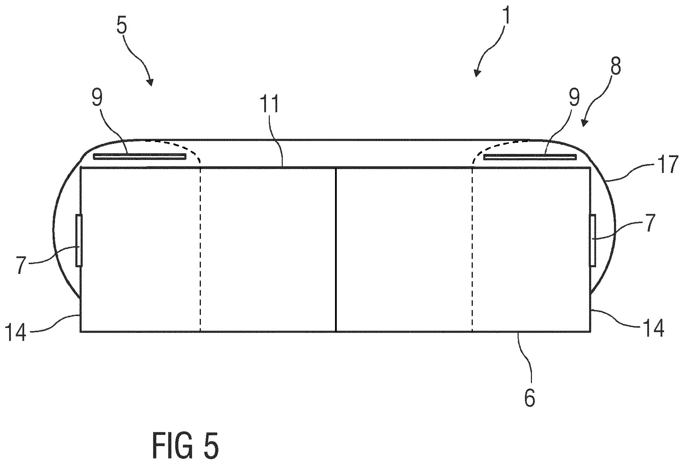

Vorteilhafterweise umfasst die Schraubenmutter 1 eine Schutzhülle 17 für das Sensormodul 5, wie beispielsweise in Figur 5 gezeigt.

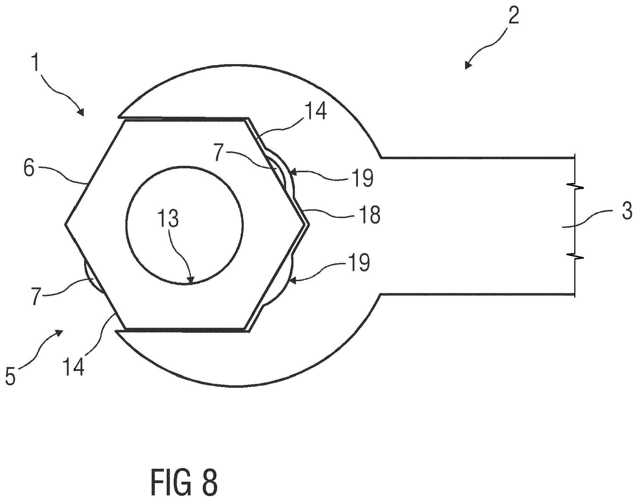

Die Montagevorrichtung 2 umfasst, wie oben bereits erwähnt, die Schraubenmutter 1 und einen Schraubenschlüssel 3. Dabei kann beispielsweise vorgesehen sein, dass das RFID-Lesegerät 16 fest mit dem Schraubenschlüssel 3 verbunden ist oder lösbar mit dem Schraubenschlüssel 3 verbindbar oder verbunden ist. Alternativ oder zusätzlich kann beispielsweise vorgesehen sein, dass eine Schraubenmutteraufnahme 18 des Schraubenschlüssels 3 mindestens eine Ausnehmung 19 zur Aufnahme des mindestens einen Verformungserfassungssensors 7 der Schraubenmutter 1 oder des jeweiligen der Schraubenmutteraufnahme 18 zugewandten Verformungserfassungssensors 7 der Schraubenmutter 1 aufweist, wie in Figur 8 gezeigt. Vorteilhafterweise ist diese mindestens eine Ausnehmung 19 oder die jeweilige Ausnehmung 19 korrespondierend zu einem über eine Oberfläche des Grundkörpers 6 der Schraubenmutter 1 überstehenden Bereich dieses Verformungserfassungssensors 7 ausgebildet, wie in Figur 8 gezeigt.

Im Folgenden werden, insbesondere anhand der in den Figuren 1 bis 10 dargestellten Ausführungsformen, mögliche Merkmale und Vorteile dieser Schraubenmutter 1 detailliert beschrieben.

Die Schraubenmutter 1 bildet eine Vorrichtung oder ist, insbesondere zusammen mit dem RFID-Lesegerät 16 und beispielsweise mit dem Schraubenschlüssel 3, ein Bestandteil einer Vorrichtung, wobei diese Vorrichtung, insbesondere die Schraubenmutter 1, die Durchführung eines Verfahrens zur, insbesondere schnellen, einfachen, zuverlässigen und kostengünstigen, Ermittlung der Vorspannkraft in einer Schraubverbindung ermöglicht. Vorteilhafterweise müssen dabei an den für die Schraubverbindung verwendeten Bauteilen, beispielsweise an der Schraube 4 oder dem Gewindebolzen oder der Gewindestange, an einer möglicherweise verwendeten Unterlegscheibe und vorteilhafterweise auch am Grundkörper 6 der Schraubenmutter 1, möglichst wenige oder keine mechanischen Änderungen vorgenommen werden. Dadurch können vorteilhafterweise bestehende Normen und Zulassungen für diese Bauteile weiterhin eingehalten werden.

Insbesondere zur Erreichung dieser Zielstellung erfolgt die Messung beispielsweise mittels Dehnungs- und/oder Kraftsensoren und ohne eine externe elektrische Kontaktierung an der Schraubenmutter 1. D. h. der jeweilige Verformungserfassungssensor 7 ist vorteilhafterweise als ein solcher Dehnungs- und/oder Kraftsensor ausgebildet.

Die Anbringung des Sensormoduls 5 am Grundkörper 6 der Schraubenmutter 1 vereinfacht die Durchführung der Ermittlung der Vorspannkraft im Vergleich zur Anbringung an anderen Bauteilen der Schraubverbindung erheblich, da es sich bei dem Grundkörper 6 der Schraubenmutter 1 vorteilhafterweise um ein Bauteil handelt, welches standardisiert und leicht austauschbar ist, wobei Muttern eine wesentlich geringere Vielfalt aufweisen als beispielsweise Schrauben.

Zur Vermeidung von möglichen Einflüssen auf die Festigkeit der Schraubverbindung ist eine Baugröße des Sensormoduls 5 vorteilhafterweise, zumindest weitestgehend, miniaturisiert. Sehr vorteilhaft lassen sich hierfür Dehnmessstreifen-Sensoren, im Folgenden auch als DMS-Sensoren bezeichnet, als Verformungserfassungssensoren 7 verwenden, welche die Dehnung an einer Seitenfläche 14 oder, bei Einsatz mehrerer solcher Verformungserfassungssensoren 7, bevorzugt an mehreren Seitenflächen 14 des Grundkörpers 6 der Schraubenmutter 1 ermitteln, wobei diese Dehnung mit der in der Schraubverbindung anliegenden Vorspannkraft korreliert ist.

Für die Realisierung der kontaktlosen Ermittlung dieser Dehnung und somit der Vorspannkraft wird in besonders vorteilhafter Weise die RFID-Technologie zur Energie- und Datenübertragung verwendet. Dadurch ist keine zusätzliche Batterie zur elektrischen Energieversorgung des Sensormoduls 5 erforderlich, so dass das gesamte Sensormodul 5 in einer miniaturisierten und robusten Bauform am Grundkörper 6 der Schraubenmutter 1 angebracht und mit dieser zusammen als ein Bauteil in der jeweiligen Applikation sehr flexibel genutzt werden kann. Für das Auslesen der in der Schraubverbindung anliegenden Vorspannkraft kann beispielsweise ein standardmäßiges mobiles RFID-Lesegerät 16 verwendet werden.

Durch die hier beschriebene und dargestellte Ausführung des Sensormoduls 5, insbesondere durch die ringförmige Leiterplatte 9 und die darauf ausgebildete Antenne 10, ist ein richtungsunabhängiges, insbesondere von einem Drehwinkel der Schraubenmutter 1 unabhängiges, und damit schnelles, ergonomisches und sicheres Auslesen der digitalisierten Messwerte möglich. Die hier beschriebene Schraubenmutter 1 mit dem hier beschriebenem Sensormodul 5 ermöglicht eine zuverlässige und ergonomische Messung der Vorspannkraft sowohl bei einer Installation der Schraubverbindung als auch bei nachfolgenden zyklischen Überprüfungen während des gesamten Lebenszyklus der Schraubverbindung, da das Sensormodul 5 passiv arbeitet und keine Batterie benötigt.

Bei der im Folgenden ausführlich beschriebenen Lösung erfolgt die Ermittlung der in der Schraubverbindung anliegenden Vorspannkraft an den Seitenflächen 14 des Grundkörpers 6 der Schraubenmutter 1 mittels eines oder mehrerer, insbesondere als Dehnungssensoren ausgebildeten, Verformungserfassungssensoren 7. Im Folgenden wird, insbesondere für die hier beschriebenen und in den Figuren 1 bis 10 dargestellten Ausführungsformen, davon ausgegangen, dass der Grundkörper 6 der Schraubenmutter 1 aus Metall besteht, da insbesondere für Schraubverbindungen mit solchen Muttern die Ermittlung der Vorspannkraft von Bedeutung ist, wobei jedoch Grundkörper 6 aus anderen Materialien, beispielsweise Kunststoff oder Keramik, nicht ausgeschlossen werden sollen. Beim Anziehen der Schraubverbindung werden in der Schraubenmutter 1, insbesondere in deren Grundkörper 6, mechanische Spannungen aufgebaut, welche direkt mit der anliegenden Vorspannkraft korreliert sind und an der jeweiligen Seitenfläche 14 als eine Dehnung registriert werden können.

In Figur 1 ist die vorgeschlagene Anbringung eines DMS-Sensors als gebräuchlichste Ausführung eines Dehnungssensors und somit eines Verformungserfassungssensors 7 dargestellt. Vorzugsweise ist aus Symmetriegründen eine zentrische oder zumindest möglichst zentrische Positionierung des Verformungserfassungssensors 7 auf der Seitenfläche 14 des Grundkörpers 6 der Schraubenmutter 1 vorgesehen.

Da unter realen Einsatzbedingungen aufgrund von Unebenheiten an den beteiligten Bauteilen, aufgrund einer schrägen Montage und/oder aufgrund von Verunreinigungen das Anziehen der Schraubverbindung meist nicht exakt gleichartig erfolgt und damit zu keiner rotationssymmetrischen Verteilung der Kräfte führt, sind zur Erhöhung der Messgenauigkeit vorteilhafterweise mindestens zwei solche Verformungserfassungssensoren 7 am Grundkörper 6 vorgesehen, welche beispielsweise an zwei gegenüberliegenden Seitenflächen 14 des Grundkörpers 6 der Schraubenmutter 1 montiert sind, wie in den Figuren 2, 4, 5 und 8 gezeigt. Die jeweiligen Messwerte der Verformungserfassungssensoren 7 werden dann vorteilhafterweise mittels eines geeigneten Auswertealgorithmus, z.B. einfache Addition oder Bildung eines Mittelwertes, verrechnet und bewertet.

Als Verformungserfassungssensor 7, insbesondere DMS-Sensor, sind, insbesondere bei der Ausbildung des Grundkörpers 6 aus Metall, alle für die Montage auf Metall gebräuchlichen Sensortypen zur Messung von Dehnungen, Stauchungen und Scherkräften anwendbar, z.B. Metall-DMS-Widerstände auf Folie, Halbleiter-DMS-Widerstände und piezoresistive DMS. Die Montage der Verformungserfassungssensoren 7, insbesondere DMS-Sensoren, auf der jeweiligen Seitenfläche 14 des Grundkörpers 6 der Schraubenmutter 1 erfolgt hierbei vorteilhafterweise mit einer üblicherweise für den jeweiligen Sensortyp angewandten Montagetechnologie, beispielsweise Kleben mit einem Acrylat, Kleben mit einem Epoxidharz, Punktschweißen oder Aufglasen.

In der einfachsten Bauart werden als Verformungserfassungssensoren 7 beispielsweise DMS-Sensoren mit Einzel-Sensorelementen verwendet, welche so montiert sind, dass sie die Kraft in der Längsachse des Grundkörpers 6 der Schraubenmutter 1 messen, d. h. in Rotationsachsenrichtung des Grundkörpers 6 der Schraubenmutter 1. Die Rotationsachse ist dabei, wie oben bereits erläutert, die Achse, um welche die Schraubenmutter 1 zum Herstellen der Schraubverbindung gedreht wird.

DMS-Sensoren sind jedoch meist sehr niederohmig (<= 1 kΩ) und liefern auch ein nur sehr kleines Messsignal (< 1 mV), welches oft auch temperaturabhängig ist. Aus diesem Grund werden die Einzelsensorelemente vorteilhafterweise zusammen mit Referenz-Festwiderständen als Halb- bzw. als Vollbrücke betrieben. Alternativ können bei der Montage mehrerer als DMS-Sensoren ausgebildeter Verformungserfassungssensoren 7 am Grundkörper 6 der Schraubenmutter 1 die Einzelsensorelemente auch zu einer Messbrücke verschaltet werden, was die Auswertung vereinfachen kann. Alternativ können, insbesondere bei Muttern, insbesondere Grundkörpern 6, mit großer Baugröße, als Verformungserfassungssensoren 7 auch DMS-Sensoren mit mehreren Sensorelementen verwendet werden, welche in Form einer Halb- oder Vollbrücke verschaltet sind und/oder über eine Temperaturkompensation verfügen. Alternativ ist auch die Verwendung komplexerer DMS-Sensoren als Verformungserfassungssensor 7 möglich, z. B. sogenannte Rosetten-DMS, welche jedoch eine mehrkanalige MessElektronik erfordern.

Das Auslesen der ermittelten Messwerte des mindestens einen, insbesondere als DMS-Sensor ausgebildeten, Verformungserfassungssensors 7 bzw. der mehreren, insbesondere als DMS-Sensoren ausgebildeten, Verformungserfassungssensoren 7 erfolgt vorteilhafterweise unter Anwendung der RFID-Technologie, zum Beispiel im HF- oder UHF-Bereich, kontaktlos und ohne Verwendung einer Batterie im Sensormodul 5. Es kann jedoch beispielsweise ein wieder aufladbarer Energiespeicher, insbesondere ein Kondensator, vorgesehen sein, wie oben bereits erwähnt. Die Energieversorgung des Sensormoduls 5 erfolgt durch ein vom RFID-Lesegerät 16 ausgesandtes elektromagnetisches Feld 20, wie in Figur 2 gezeigt. Eine bidirektionale Datenübertragung erfolgt, wie bei der RFID-Technologie üblich, ebenfalls über das gleiche elektromagnetische Feld 20.

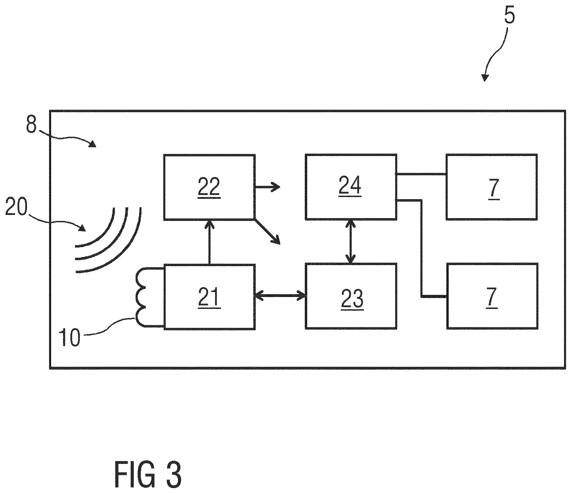

Figur 3 zeigt ein Blockschaltbild einer möglichen Ausführungsform des Sensormoduls 5, welches die Ermittlung der Vorspannkraft im dargestellten Beispiel mit zwei, insbesondere als DMS-Sensor ausgebildeten, Verformungserfassungssensoren 7 realisiert. Das Sensormodul 5 umfasst ein Radio Frontend 21, ein Power Management, d. h. eine Energiemanagementeinheit 22, einen Mikrocontroller 23, insbesondere als State Machine ausgebildet, mindestens einen Analog-Digital-Wandler 24, auch als Analog-Digital-Converter bezeichnet, und den mindestens einen Verformungserfassungssensor 7, vorteilhafterweise mehrere, hier zwei, Verformungserfassungssensoren 7. Bestandteil der RFID-Transpondereinheit 8 ist insbesondere das Radio Frontend 21, beispielsweise auch das Power Management, beispielsweise auch der Mikrocontroller 23.

Ein bei RFID-Transpondereinheiten 8 üblicherweise genutzter nichtflüchtiger Speicher, zum Beispiel EEPROM oder FRAM, ist im Radio Frontend 21 enthalten und nicht separat eingezeichnet. Das Radio Frontend 21 ist insbesondere ein Kommunikationsmodul der RFID-Transpondereinheit 8, umfassend vorteilhafterweise auch die Antenne 10, über welche insbesondere die Kommunikation mit dem RFID-Lesegerät 16 und der Empfang der vom RFID-Lesegerät 16 übertragenen elektrischen Energie erfolgt.

Das Power Management, d. h. die Energiemanagementeinheit 22, beinhaltet beispielsweise eine Spannungsstabilisierung, eine Filterung, eine Spannungsüberwachung sowie optional den bereits erwähnten Energiespeicher, insbesondere in Form eines Kondensators, welcher bei Abschaltung des elektromagnetischen Feldes 20 des RFID-Lesegerätes 16, beispielsweise um durch dieses Abschalten ein Signal-Rausch-Verhältnis zu verbessern, für eine vorgegebene Mindestzeit die elektrische Energieversorgung sicherstellt, so dass auch in diesem Fall die Durchführung der Ermittlung der Vorspannkraft möglich ist.

Für eine Messung elektrischer Spannungen der, insbesondere als DMS-Sensoren ausgebildeten, Verformungserfassungssensoren 7 ist der Analog-Digital-Wandler 24 hier mit mehreren Signaleingängen für die mehreren Verformungserfassungssensoren 7 vorgesehen. Alternativ kann auch für jeden Verformungserfassungssensor 7 ein separater Analog-Digital-Wandler 24 vorgesehen sein, wobei in diesem Fall die Analog-Digital-Wandler 24 zur Verbesserung der Störfestigkeit vorteilhafterweise räumlich möglichst nah, d. h. so nah wie möglich, bei dem jeweiligen Verformungserfassungssensor 7 positioniert sind.

Vorteilhafterweise sind alle elektronischen Bauteile 25 des Sensormoduls 5, d. h. insbesondere das Radio Frontend 21, die Energiemanagementeinheit 22, der Mikrocontroller 23 und/oder der mindestens eine Analog-Digital-Wandler 24, auf der ringförmigen Leiterplatte 9 angeordnet. Die Leiterplatte 9 ist beispielsweise aus FR4 oder einem ähnlichen Material oder aus Polymerfolie ausgebildet, weist vorteilhafterweise mehrere Lagen, beispielsweise zwei bis sechs Lagen, auf, und weist beispielsweise eine Dicke von ca.1,0 mm auf. Die Leiterplatte 9 weist vorteilhafterweise eine, zumindest näherungsweise, kreisrunde oder elliptische Kontur oder eine eine sechseckige Außenkontur umfassende Kontur auf. Sie ist zweckmäßigerweise auf der der Krafteinwirkung entgegengesetzten Stirnseite 11 des Grundkörpers 6 der Schraubenmutter 1 angeordnet. Sie ist vorteilhafterweise fest mit dem Grundkörper 6 verbunden. Vorteilhafterweise ist die Leiterplatte 9 koaxial mit dem Grundkörper 6 der Schraubenmutter 1 ausgerichtet, wie in Figur 4 gezeigt. Die Anordnung der Leiterplatte 9 auf der der Krafteinwirkung entgegengesetzten Stirnseite 11 bedeutet dabei, dass vorgesehen ist, die Schraubenmutter 1 in der Schraubverbindung derart zu montieren, dass die Stirnseite 11 des Grundkörpers 6, auf welcher die Leiterplatte 9 angeordnet ist, von der Krafteinwirkung, welche durch diese Schraubverbindung entsteht, abgewandt ist.

Die Größe der Durchführungsöffnung 12 in der ringförmigen Leiterplatte 9 ist zweckmäßigerweise so dimensioniert, dass die für die Schraubverbindung verwendete Schraube 4 oder Gewindestange oder der Gewindebolzen im auf der Schraubenmutter 1 montierten Zustand der Leiterplatte 9 sicher durchgesteckt werden kann. Da diese Leiterplatte 9 einen gewissen Bauraum benötigt, weist der Grundkörper 6 der Schraubenmutter 1 für die Nutzung des beschriebenen Sensormoduls 5 vorteilhafterweise eine gewisse Größe auf, so dass die Anwendung beispielsweise für Muttern > M10 sinnvoll erscheint. Dies betrifft auch die Montage der Verformungserfassungssensoren 7 auf den Seitenflächen 14 des Grundkörpers 6 der Schraubenmutter 1, welche auch eine gewisse Fläche erfordern.

Zur Miniaturisierung der Baugröße und zur Erhöhung der Robustheit sind vorteilhafterweise alle Bauteile 25 auf der Leiterplatte 9 einseitig und vorteilhafterweise mittels SMD und/oder Flipchip-Montage und/oder COB-Montage bestückt, wobei die Lage der elektronischen Bauteile 25 auf der ringförmigen Leiterplatte 9 relativ frei wählbar ist und somit vorteilhafterweise hinsichtlich Störfestigkeit und Fertigungskosten optimiert ist.

Zusätzlich dient diese ringförmige Leiterplatte 9 vorteilhafterweise als Träger für die Antenne 10, welche die elektromagnetische Kopplung mit dem RFID-Lesegerät 16 realisiert und welche sehr vorteilhaft auf der Leiterplatte 9 als eine gedruckt Spule ("printed antenna") ausgeführt ist. Die Anzahl der Windungen dieser Spule ist im Wesentlichen abhängig von der gewählten RFID-Trägerfrequenz und der Größe des Grundkörpers 6 der Schraubenmutter 1. Sie liegt beispielsweise bei ca. 10 Windungen.

Des Weiteren dient die Leiterplatte 9 zweckmäßigerweise der elektrischen Kontaktierung der an den Seitenflächen 14 des Grundkörpers 6 der Schraubenmutter 1 montierten Verformungserfassungssensoren 7, insbesondere DMS-Sensoren, beispielsweise mittels Löten, Kleben oder Drahtbonden. Elektrische Leiterzüge 26, insbesondere auf der Leiterplatte 9, zwischen den Verformungserfassungssensoren 7, insbesondere DMS-Sensoren, und dem mindestens einen Analog-Digital-Wandler 24, wie hier gezeigt, oder den mehreren Analog-Digital-Wandlern 24, sind zur Verbesserung der Störfestigkeit vorteilhafterweise möglichst kurz, d. h. so kurz wie möglich, und parallel ausgeführt. Zudem sind sie vorteilhafterweise durch Kupferflächen, welche in der Leiterplatte 9 darüber und darunter angeordnet sind, geschirmt. Die beschriebene Mehrfachfunktion der Leiterplatte 9 führt zu einer erheblichen Reduzierung der Baugröße und der Kosten für das Sensormodul 5 und damit der als Sensormutter ausgebildeten Schraubenmutter 1.

Die als Sensormutter ausgebildete Schraubenmutter 1 besteht somit vorteilhafterweise aus dem Grundkörper 6 als eigentliche Mutter sowie dem Sensormodul 5, welches wiederum vorteilhafterweise aus dem mindestens einen oder den mehreren Verformungserfassungssensoren 7, insbesondere DMS-Sensoren, insbesondere montiert an jeweils einer Seitenfläche 14 des Grundkörpers 6 der Schraubenmutter 1, der Leiterplatte 9 sowie vorteilhafterweise der Schutzhülle 17 um die Verformungserfassungssensoren 7, insbesondere DMS-Sensoren, und die Leiterplatte 9 besteht, wie in Figur 5 gezeigt. Die Schutzhülle 17 ist beispielsweise eine Umhüllung, ein Gehäuse und/oder ein Verguss.

Der gesamte Aufbau der Schraubenmutter 1 ist hierbei vorteilhafterweise in einer monolithischen Bauweise ausgeführt, um im Ergebnis ein robustes, flexibel einsetzbares und kontaktlos arbeitendes Messmittel für die Anwendung der Vorspannungsermittlung in Schraubverbindungen zu erhalten. Diese als Sensormutter ausgebildete Schraubenmutter 1 ist vorteilhafterweise wie eine standardmäßige Mutter ohne grundsätzliche Einbußen in der Stabilität als Objekt zum Festziehen von Schraubverbindungen geeignet, da als Grundkörper 6 vorteilhafterweise eine originale Mutter ohne Änderungen ihres Aufbaus verwendet wird. Eine Ausnahme hiervon stellt beispielsweise die Ausführungsform gemäß den Figuren 9 und 10 dar, d. h. die Anordnung des jeweiligen Verformungserfassungssensors 7 in einer Kavität 15 im Grundkörper 6, da hier die jeweilige Kavität 15 im Grundkörper 6, beispielsweise in einer herkömmlichen Mutter, ausgebildet wird und somit eine Abweichung des Grundkörpers 6 von dieser herkömmlichen Mutter darstellt.

Die beschriebene Ausführung der Leiterplatte 9 als ringförmige Leiterplatte 9 mit einer gedruckten ringförmigen Antenne 10, welche die Schrauböffnung 13 des Grundkörpers 6 und bei hergestellter Schraubverbindung oder bereits auch während deren Herstellung üblicherweise auch einen durch die Schraubenmutter 1 hindurchreichenden Teil der Schraube 4, der Gewindestange oder des Gewindebolzen umschließt, führt vorteilhafterweise bezüglich der Antenne 10 zu einem, zumindest näherungsweise, rotationssymmetrischen Aufbau, so dass das Sensormodul 5 und damit die als Sensormutter ausgebildete Schraubenmutter 1 kontaktlos richtungsunabhängig ausgelesen werden kann, wie in Figur 2 gezeigt. Dies ist ein wesentlicher Vorteil der hier beschriebenen Lösung. Diese Eigenschaft ist für die Anwendung der Schraubenmutter 1 zur Ermittlung der Vorspannkraft von besonderer Bedeutung, da bei Festziehen der Schraubverbindung nicht vorhersehbar ist, bei welchem Drehwinkel die erforderliche Vorspannkraft erreicht wird und bei welchem Winkel somit die Sensormesswerte ausgelesen werden können. Durch die beschriebene Lösung ist dies bei jedem Drehwinkel der Schraubenmutter 1 möglich. Diese Richtungsunabhängigkeit erleichtert die Anwendung der Schraubenmutter 1 zur Ermittlung der Vorspannkraft erheblich.

Für das Anziehen der Schraubverbindung werden als Schraubenschlüssel 3 beispielsweise Maulschlüssel oder Ringschlüssel oder ähnliche Werkzeuge verwendet, welche hierfür mit der Schraubenmutter 1, insbesondere mit deren Grundkörper 6, in Kontakt gebracht werden müssen und zum Festziehen eine erhebliche Kraftwirkung auf die Schraubenmutter 1, insbesondere auf deren Grundkörper 6, hervorrufen. Um eine praktikable und sichere Verwendung dieser Werkzeuge, insbesondere Schraubenschlüssel 3, sind die Verformungserfassungssensoren 7, insbesondere DMS-Sensoren, vorteilhafterweise an einer geeigneten Position und mit möglichst geringer Bauhöhe am Grundkörper 6 montiert. Alternativ oder zusätzlich sind die Verformungserfassungssensoren 7, insbesondere DMS-Sensoren, vorteilhafterweise durch die bereits erwähnte Schutzhülle 17, beispielsweise eine Vergussschicht oder ein Gehäuse, vor möglichen Belastungen oder Beschädigungen durch diese Werkzeuge, insbesondere Schraubenschlüssel 3, geschützt, wie in Figur 5 gezeigt.

In einer möglichen Ausführungsform der Montagevorrichtung 2 ist vorgesehen, dass die Form des zu verwendenden Werkzeugs, insbesondere des Schraubenschlüssels 3, in geeigneter Weise modifiziert ist, d. h. an die Form, insbesondere Umfangsform, insbesondere Umfangskontur, der Schraubenmutter 1 angepasst ist, um ein einfaches Handling sicherzustellen und mögliche Beschädigungen zu vermeiden. Diese Modifikation besteht beispielsweise in der bereits erwähnten Ausgestaltung der Schraubenmutteraufnahme 18 mit der mindestens einen korrespondierend zum über die Oberfläche des Grundkörpers 6 der Schraubenmutter 1 überstehenden Bereich des mindestens einen Verformungserfassungssensors 7 ausgebildeten Ausnehmung 19 oder mit den mehreren Ausnehmungen 19 zur Aufnahme des mindestens einen Verformungserfassungssensors 7, wie in Figur 8 gezeigt, d. h. beispielsweise in Ausbuchtungen in hinteren Backen des Schraubenschlüssels 3. Dadurch ist auch eine sichere Anwendung eines als Maulschlüssel ausgebildeten Schraubenschlüssels 3 auch bei zwei sich gegenüberliegend am Grundkörper 6 angeordneten Verformungserfassungssensoren 7 möglich.

Vorteilhafterweise steht zudem die Leiterplatte 9 inklusive der beispielsweise als Gehäuse oder Verguss ausgebildeten Schutzhülle 17 nicht oder im Bereich der insbesondere als DMS-Sensoren ausgebildeten Verformungserfassungssensoren 7 zumindest nicht weiter als diese über die Kontur des Grundkörpers 6 über, um auch hier mögliche Beschädigungen durch den Schraubenschlüssel 3 oder ein anderes verwendetes Werkzeug zu vermeiden.

Eine Bauhöhe der, insbesondere mit der Schutzhülle 17 umhüllten, Leiterplatte 9 ist vorteilhafterweise möglichst gering, d. h. so gering wie möglich. Beispielsweise liegt sie im Bereich von wenigen Millimetern. Zum Beispiel beträgt sie ca. 1 mm bis 10 mm.

Durch die beschriebene Bauweise wird insgesamt ein guter Schutz des Sensormoduls 5 inklusive der insbesondere als DMS-Sensoren ausgebildeten Verformungserfassungssensoren 7 vor Beschädigung beim Handling mit dem Schraubenschlüssel 3 erreicht. Grundsätzlich unterscheidet sich somit die Montage der hier beschriebenen Schraubenmutter 1 hinsichtlich des zu verwendenden Werkzeugs und Aufwands vorteilhafterweise nicht oder zumindest nicht wesentlich von einer Montage einer vergleichbaren herkömmlichen Mutter ohne Sensormodul 5. Die Montage erfolgt damit weiterhin sehr einfach, zuverlässig und kostengünstig, beispielsweise mit einem Schraubenschlüssel 3.

Optional kann die Montage des mindestens einen Verformungserfassungssensors 7 oder der mehreren Verformungserfassungssensoren 7, insbesondere jeweils ausgebildet als DMS-Sensor, in jeweils einer Kavität 15 erfolgen, wie oben bereits beschrieben und in den Figuren 9 und 10 gezeigt, also in einer Vertiefung in der jeweiligen Seitenfläche 14 des Grundkörpers 6, so dass der jeweilige Verformungserfassungssensor 7 noch besser geschützt ist. Diese Kavität 15 ist im Grundkörper 6 vorteilhafterweise bis zur Leiterplatte 9 ausgebildet, um auch elektrische Verbindungsleitungen 27 des jeweiligen Verformungserfassungssensor 7 zur Leiterplatte 9 zu schützen, wie in den Figuren 9 und 10 gezeigt. Vorteilhafterweise ist der jeweilige Verformungserfassungssensor 7 inklusive seiner Verbindungsleitungen 27 bündig in die jeweilige Seitenfläche 14 des Grundkörpers 6 der Schraubenmutter 1 verbaut, so dass eine Beschädigung des jeweiligen Verformungserfassungssensors 7 durch den Schraubenschlüssel 3 oder ein anderes Werkzeug, zumindest nahezu, ausgeschlossen werden kann.

Besonders vorteilhaft ist es bei Verwendung der Schraubenmutter 1, wenn auch während des Anziehens ständig die Vorspannkraft ermittelt und angezeigt werden kann. Für diesen Zweck ist, wie oben bereits erwähnt, beispielsweise vorgesehen, dass, insbesondere bei der Montagevorrichtung 2, das RFID-Lesegerät 16 fest mit dem Schraubenschlüssel 3 verbunden ist oder lösbar mit dem Schraubenschlüssel 3 verbindbar oder verbunden ist, d. h. der zu verwendende Schraubenschlüssel 3 kann optional mit dem RFID-Lesegerät 16 versehen sein, welches fest oder auch abnehmbar mit diesem verbunden ist. Dieses RFID-Lesegerät 16 kann für die Messwert-Anzeige beispielsweise eine Anzeigeeinheit 28, insbesondere ein Display, aufweisen und/oder die Messwerte beispielsweise über eine Leitung und/oder drahtlos, beispielsweise über Bluetooth oder eine andere drahtlose Technologie, zu einem weiteren Gerät, beispielsweise einem Mobiltelefon, insbesondere Smartphone, oder einem tragbaren Computer, beispielsweise einem Tablet oder einem Notebook, übertragen, so dass sie dort angezeigt und/oder gespeichert werden können.

Ein wesentlicher Vorteil der Ermittlung der Vorspannkraft der Schraubverbindung am Grundkörper 6 der Schraubenmutter 1, welcher vorteilhafterweise als eine herkömmliche Mutter ausgebildet ist, ist zusätzlich, dass es sich bei Muttern um ein kostengünstiges Bauteil handelt, welches in standardisierten Baugrößen und Bauformen angeboten wird und dessen Produktvariabilität gegenüber Schrauben deutlich geringer ist. Damit können Muttern, welche als Grundkörper 6 für die hier beschriebene Schraubenmutter 1 verwendet werden und entsprechend dem hier beschriebenen Aufbau mit, insbesondere als DMS-Sensoren ausgebildeten, Verformungserfassungssensoren 7 versehen werden, kostengünstiger und in größeren Serien hergestellt werden als beispielsweise Schrauben 4 oder gar Spezialschrauben. Gegenüber bisher angebotenen oder denkbaren anderen Lösungen gestattet die Ermittlung der in der Schraubverbindung wirkenden Vorspannkraft mit der mit dem hier beschriebenen Sensormodul 5 versehenen Schraubenmutter 1 eine effektive Massenfertigung, Lagerhaltung und Vermarktung dieser als Sensormutter ausgebildeten Schraubenmutter 1 für standardisierte Mutteranwendungen. Zusätzlich ist der Austausch der Schraubenmutter 1, beispielsweise bei einem Ausfall und/oder zur Durchführung einer Rekalibrierung des jeweiligen Verformungserfassungssensors 7 wesentlich einfacher möglich als der Austausch einer Schraube 4 oder eines Gewindebolzens.

Zusätzlich zur Nutzung des mindestens einen oder des jeweiligen Verformungserfassungssensors 7, insbesondere DMS-Sensors für die Verformungsmessung, insbesondere Dehnungsmessung, weist das Sensormodul 5 beispielsweise mindestens einen oder mehrere weitere Sensoren auf. Dieser mindestens eine weitere Sensor oder diese mehreren weiteren Sensoren wird/werden dann vorteilhafterweise ebenfalls mittels der RFID-Technologie betrieben und ausgelesen, d. h. insbesondere erhalten auch sie, analog zum jeweiligen Verformungserfassungssensor 7, elektrische Energie vom RFID-Lesegerät 16 über das elektromagnetische Feld 20 und das Auslesen der Sensorergebnisse erfolgt ebenfalls mittels des RFID-Lesegeräts 16.

Beispielsweise ist/sind mindestens ein Temperatursensor oder mehrere Temperatursensoren als weitere Sensoren auf der Leiterplatte 9 des Sensormoduls 5 oder im Bereich, insbesondere in unmittelbarer Umgebung, der Verformungserfassungssensoren 7 oder des jeweiligen Verformungserfassungssensors 7 angeordnet. Eine mit dem mindestens einen Temperatursensor gemessene Temperatur kann dann beispielweise zur Temperaturkompensation der mit dem, insbesondere als DMS-Sensor ausgebildeten, jeweiligen Verformungserfassungssensor 7 gemessenen Signale verwendet werden.

Alternativ oder zusätzlich ist/sind mindestens ein dreidimensionaler Beschleunigungssensor oder mehrere dreidimensionale Beschleunigungssensoren auf MEMS-Basis als weitere Sensoren möglich. Dies ist relativ einfach umsetzbar. Dieser jeweilige weitere Sensor ist dann beispielsweise auf der, insbesondere als FR4-Leiterplatte ausgebildeten, Leiterplatte 9 angeordnet und kann beispielsweise selbst geringfügige Lageänderungen des Sensormoduls 5 und damit des Messobjektes, d. h. der Schraubenmutter 1, detektieren. Diese Informationen können insbesondere bei bewegbaren Messobjekten, worum es sich bei Schraubenmuttern 1 handelt, relevant sein. Alternativ der zusätzlich ermöglichen solche MEMS-Sensoren auch eine Messung von Beschleunigungen und Schwingungen. Alternativ oder zusätzlich kann beispielsweise ein solcher MEMS-Sensor mit einem zusätzlichen Sensor zur Messung der Winkelgeschwindigkeit oder der Magnetfeldstärke, auch des Erdmagnetfeldes, am Sensormodul 5 vorgesehen sein.

Da größere Metallfläche in der unmittelbaren Umgebung einer Spule im Allgemeinen zu einer Beeinflussung dieser Spule hinsichtlich ihrer Induktivität und ihrer Güte führen, betrifft dies auch die vorteilhafterweise als Spule, insbesondere als gedruckte Spule, ausgebildete Antenne 10 auf der Leiterplatte 9 des Sensormoduls 5, welche für die Kopplung mit dem RFID-Lesegerät 16 verwendet wird und somit wie üblich zusammen mit einer Kapazität einen Parallelschwingkreis bildet. Durch das Metall beispielsweise einer in der Schraubverbindung verwendeten Unterlegscheibe und das Metall insbesondere des durch die Durchführungsöffnung 12 im Sensormodul 5 hindurchgeführten Teils der Schraube 4 oder des Gewindebolzens oder der Gewindestange werden insbesondere aufgrund von in diesen Metallen auftretenden Wirbelstromverlusten sowie gegebenenfalls verwendeten permeablen Materialien, beispielsweise Stahl, die Resonanzfrequenz des Schwingkreises verstimmt und die Güte des Schwingkreises wesentlich reduziert, was zu einer negativen Beeinflussung der Energie- und Datenübertragung über die RFID-Kopplung führt. Die auftretende Verstimmung der Resonanzfrequenz kann durch einen entsprechenden Abgleich korrigiert werden.

Zur Vermeidung einer zu starken Reduzierung der Güte des Schwingkreises und damit des maximal möglichen Leseabstandes mit dem RFID-Lesegerät 16 durch das Metall ist vorteilhafterweise ein Mindestabstand der als Spule ausgebildeten Antenne 10 auf der Leiterplatte 9 zum Grundkörper 6 und zur Schrauböffnung 13, insbesondere zum Gewinde in der Schrauböffnung 13, vorgesehen, welcher beispielsweise im Bereich von ca. 1 mm liegt. Das Design der als Spule ausgebildeten Antenne 10 auf der Leiterplatte 9 des Sensormoduls 5 ist somit so gestaltet, dass die Windungen der Spule auf der ringförmigen Leiterplatte 9 möglichst weit, beispielsweise so weit wie möglich, außen liegen und zudem möglichst auf zumindest einer Leiterplattenschicht der Leiterplatte 9 liegen, welche sich weit, beispielsweise am weitesten, entfernt vom Grundkörper 6 befindet, wie in den Figuren 4, 6, 7, 9 und 10 gezeigt.

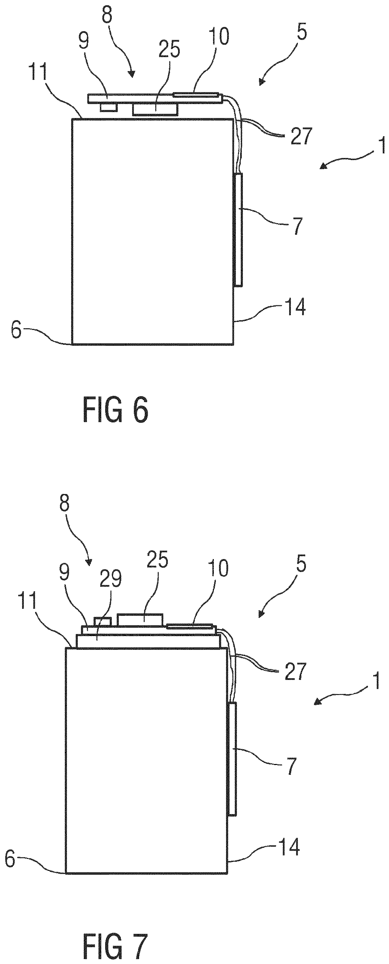

In möglichen Ausführungsformen ist zwischen der Leiterplatte 9 und dem Grundkörper 6, insbesondere dessen Stirnseite 11, auf welcher das Sensormodul 5 angeordnet ist, eine nicht elektrisch leitfähige, insbesondere elektrisch isolierende, zumindest hochohmige, Schicht 29 angeordnet, wie in den Figuren 7, 9 und 10 gezeigt. Durch diese Schicht 29 ist der Abstand zwischen der Leiterplatte 9 und dem Metall des Grundkörpers 6 der Schraubenmutter 1 vergrößert. Alternativ kann diese Schicht 29 beispielsweise aus einem permeablen Material ausgebildet sein, welches durch Verzerrung der Feldlinien eine wirksame Reduzierung der im Metall induzierten Wirbelströme erzeugen kann. Hierfür wird ein geeignetes permeables Material verwendet, welches auch bei einer Frequenz von beispielsweise 13,56 MHz noch keine zu großen Verluste aufweist, d. h. nur vorgegeben geringe Verluste aufweist. Hergestellt werden kann dieses Material beispielweise durch Beimischung eines geeigneten Ferritpulvers in einen flexiblen Kunststoff. Diese Schicht 29 ist somit beispielsweise aus Kunststoff ausgebildet, dem beispielsweise ein Ferritpulver beigemischt ist.

Die Nutzung der RFID-Technologie bietet neben der Realisierung der beschriebenen Messfunktion wesentliche weitere Vorteile. Insbesondere ist die Verwendung des, insbesondere in der RFID-Transpondereinheit 8 vorhandenen, nichtflüchtigen Datenspeichers für eine Speicherung von Informationen wie Identifikationsnummer, Kalibrierdaten der Sensoren, Hersteller- und Typ-Angaben der Schraubenmutter 1 sowie Nutzungsdaten sehr vorteilhaft anwendbar. Grundsätzlich bietet die RFID-Technologie durch meist implementierte Antikollisionsalgorithmen auch die Möglichkeit zum parallelen Messen und Auslesen mehrerer als Sensormutter ausgebildeten Schraubenmuttern 1, welche sich gleichseitig im elektromagnetischen Feld 20 des RFID-Lesegerätes 16 befinden.

Des Weiteren bietet die beispielsweise verwendete spezielle Ausführung der RFID-Technologie als NFC-Schnittstelle die Möglichkeit, die Messdaten mit einem Mobiltelefon, insbesondere Smartphone, oder ähnlichen Geräten mit NFC-Interface, beispielsweise mit einem tragbaren Computer, insbesondere Tablet oder Notebook, auszulesen und bei Übermittlung als NDEF-Nachricht sogar besonders einfach anzeigen und verarbeiten zu können.

### BEZUGSZEICHENLISTE

- 1: Schraubenmutter
- 2: Montagevorrichtung
- 3: Schraubenschlüssel
- 4: Schraube
- 5: Sensormodul
- 6: Grundkörper
- 7: Verformungserfassungssensor
- 8: RFID-Transpondereinheit
- 9: Leiterplatte
- 10: Antenne
- 11: Stirnseite
- 12: Durchführungsöffnung
- 13: Schrauböffnung
- 14: Seitenfläche
- 15: Kavität
- 16: RFID-Lesegerät
- 17: Schutzhülle
- 18: Schraubenmutteraufnahme
- 19: Ausnehmung
- 20: elektromagnetisches Feld
- 21: Radio Frontend
- 22: Energiemanagementeinheit
- 23: Mikrocontroller
- 24: Analog-Digital-Wandler
- 25: elektronisches Bauteil
- 26: Leiterzug
- 27: Verbindungsleitung
- 28: Anzeigeeinheit
- 29: Schicht

## Patentansprüche

1. Schraubenmutter (1) mit einem Sensormodul (5) zur Ermittlung einer Vorspannkraft einer Schraubverbindung, wobei das Sensormodul (5) mindestens einen an einem Grundkörper (6) der Schraubenmutter (1) angeordneten Verformungserfassungssensor (7) zur Erfassung einer Verformung des Grundkörpers (6) der Schraubenmutter (1) und eine RFID-Transpondereinheit (8) umfasst, und wobei eine Leiterplatte (9) des Sensormoduls (5), auf welcher eine Antenne (10) der RFID-Transpondereinheit (8) und eine elektronische Schaltung des Sensormoduls (5) ausgebildet ist und welche mit dem mindestens einen Verformungserfassungssensor (7) elektrisch leitfähig gekoppelt ist, an einer Stirnseite (11) des Grundkörpers (6) angeordnet ist,
**dadurch gekennzeichnet, dass** die Leiterplatte (9) ringförmig ausgebildet ist, wobei eine lichte Weite einer Durchführungsöffnung (12) der Leiterplatte (9) mindestens so groß ist wie eine lichte Weite einer Schrauböffnung (13) des Grundkörpers (6).

2. Schraubenmutter (1) nach Anspruch 1,
wobei die Leiterplatte (9) kreisrund oder elliptisch oder mit sechseckiger Außenkontur ausgebildet ist.

3. Schraubenmutter (1) nach einem der vorhergehenden Ansprüche,
wobei der mindestens eine Verformungserfassungssensor (7) im Bereich einer Außenumfangsseite des Grundkörpers (6) angeordnet ist.

4. Schraubenmutter (1) nach Anspruch 3,
wobei der mindestens eine Verformungserfassungssensor (7) auf einer Seitenfläche (14) angeordnet ist, oder in einer Kavität (15) angeordnet ist, welche in einer Seitenfläche (14) ausgebildet ist, oder in einer Axialbohrung im Bereich einer Kante zwischen zwei aneinander angrenzenden Seitenflächen (14) angeordnet ist.

5. Schraubenmutter (1) nach einem der vorhergehenden Ansprüche,
wobei der mindestens eine Verformungserfassungssensor (7) als ein Sensor zur Erfassung von Dehnungen, Stauchungen und/oder Scherkräften ausgebildet ist, insbesondere als ein Dehnungssensor, insbesondere als ein Dehnmessstreifensensor.

6. Schraubenmutter (1) nach einem der vorhergehenden Ansprüche,
wobei die RFID-Transpondereinheit (8) einen Energiespeicher, insbesondere einen Kondensator, aufweist.

7. Schraubenmutter (1) nach einem der vorhergehenden Ansprüche,
wobei die Antenne (10) als eine Spule auf der Leiterplatte (9) angeordnet oder ausgebildet ist.

8. Schraubenmutter (1) nach Anspruch 7,
wobei die Antenne (10) als eine gedruckte Spule auf der Leiterplatte (9) ausgebildet ist.

9. Schraubenmutter (1) nach einem der vorhergehenden Ansprüche,
wobei das Sensormodul (5) mehrere Verformungserfassungssensoren (7) umfasst, welche insbesondere um einen Außenumfang gleichmäßig verteilt am Grundkörper (6) angeordnet sind.

10. Schraubenmutter (1) nach einem der vorhergehenden Ansprüche,
umfassend eine Schutzhülle (17) für das Sensormodul (5).

11. Montagevorrichtung (2) mit einer Schraubenmutter (1) nach einem der vorhergehenden Ansprüche und einem Schraubenschlüssel (3), wobei ein RFID-Lesegerät (16) fest mit dem Schraubenschlüssel (3) verbunden ist oder lösbar mit dem Schraubenschlüssel (3) verbindbar oder verbunden ist und/oder wobei eine Schraubenmutteraufnahme (18) des Schraubenschlüssels (3) mindestens eine Ausnehmung (19) zur Aufnahme des mindestens einen Verformungserfassungssensors (7) der Schraubenmutter (1) aufweist, wobei diese mindestens eine Ausnehmung (19) korrespondierend zu einem über eine Oberfläche des Grundkörpers (6) der Schraubenmutter (1) überstehenden Bereich des mindestens einen Verformungserfassungssensors (7) ausgebildet ist.

## Claims

1. Screw nut (1) having a sensor module (5) for determining a prestressing force of a screw connection, wherein the sensor module (5) comprises at least one deformation-detecting sensor (7), which is arranged on a main body (6) of the screw nut (1), for detecting a deformation of the main body (6) of the screw nut (1) and comprises an RFID transponder unit (8), and wherein a printed circuit board (9) of the sensor module (5), on which printed circuit board an antenna (10) of the RFID transponder unit (8) and an electronic circuit of the sensor module (5) are formed and which printed circuit board is electrically conductively coupled to the at least one deformation-detecting sensor (7), is arranged on an end side (11) of the main body (6), **characterized in that** the printed circuit board (9) is of annular design, wherein a clear width of a passage opening (12) in the printed circuit board (9) is at least as large as a clear width of a screw opening (13) in the main body (6) .

2. Screw nut (1) according to Claim 1, wherein the printed circuit board (9) is of circular or elliptical design or is designed with a hexagonal outer contour.

3. Screw nut (1) according to either of the preceding claims, wherein the at least one deformation-detecting sensor (7) is arranged in the region of an outer circumferential side of the main body (6).

4. Screw nut (1) according to Claim 3, wherein the at least one deformation-detecting sensor (7) is arranged on a side face (14), or is arranged in a cavity (15) which is formed in a side face (14), or is arranged in an axial bore in the region of an edge between two mutually adjoining side faces (14).

5. Screw nut (1) according to one of the preceding claims, wherein the at least one deformation-detecting sensor (7) is designed as a sensor for detecting strain, compression and/or shear force, in particular as a strain sensor, in particular as a strain gauge sensor.

6. Screw nut (1) according to one of the preceding claims, wherein the RFID transponder unit (8) has an energy store, in particular a capacitor.

7. Screw nut (1) according to one of the preceding claims, wherein the antenna (10) is arranged or designed as a coil on the printed circuit board (9).

8. Screw nut (1) according to Claim 7, wherein the antenna (10) is designed as a printed coil on the printed circuit board (9).

9. Screw nut (1) according to one of the preceding claims, wherein the sensor module (5) comprises a plurality of deformation-detecting sensors (7), which in particular are arranged uniformly distributed on the main body (6) about an outer circumference.

10. Screw nut (1) according to one of the preceding claims, comprising a protective sleeve (17) for the sensor module (5).

11. Assembly device (2) having a screw nut (1) according to one of the preceding claims and a spanner (3), wherein an RFID reader (16) is fixedly connected to the spanner (3) or is releasably connectable or connected to the spanner (3) and/or wherein a screw nut receptacle (18) of the spanner (3) has at least one recess (19) for receiving the at least one deformation-detecting sensor (7) of the screw nut (1), wherein this at least one recess (19) is designed in a manner corresponding to a region of the at least one deformation-detecting sensor (7) projecting beyond a surface of the main body (6) of the screw nut (1).

## Revendications

1. Ecrou de vis (1), comprenant un module de capteur (5) permettant de déterminer une force de précontrainte d'un assemblage vissé, dans lequel le module de capteur (5) comprend au moins un capteur de détection de déformation (7) disposé au niveau d'un corps de base (6) de l'écrou de vis (1), permettant de détecter une déformation du corps de base (6) de l'écrou de vis (1), et une unité de transpondeur RFID (8), et dans lequel une carte de circuits imprimés (9) du module de capteur (5) sur laquelle sont réalisés une antenne (10) de l'unité de transpondeur RFID (8) et un circuit électronique du module de capteur (5) et qui est couplée de manière électriquement conductrice audit au moins un capteur de détection de déformation (7) est disposée sur une face frontale (11) du corps de base (6),
**caractérisé en ce que** la carte de circuits imprimés (9) est réalisée de manière annulaire, dans lequel une largeur libre d'une ouverture de passage (12) de la carte de circuits imprimés (9) est au moins aussi grande qu'une largeur libre d'une ouverture de vissage (13) du corps de base (6).

2. Ecrou de vis (1), selon la revendication 1, dans lequel la carte de circuits imprimés (9) est réalisée de manière circulaire ou elliptique ou avec un contour extérieur hexagonal.

3. Ecrou de vis (1) selon l'une quelconque des revendications précédentes, dans lequel ledit au moins un capteur de détection de déformation (7) est disposé dans la zone d'une face circonférentielle extérieure du corps de base (6).

4. Ecrou de vis (1) selon la revendication 3, dans lequel ledit au moins un capteur de détection de déformation (7) est disposé sur une face latérale (14), ou est disposé dans une cavité (15) qui est réalisée dans une face latérale (14), ou est disposé dans un alésage axial dans la zone d'une arête entre deux faces latérales (14) adjacentes l'une à l'autre.

5. Ecrou de vis (1) selon l'une quelconque des revendications précédentes, dans lequel ledit au moins un capteur de détection de déformation (7) est réalisé sous la forme d'un capteur permettant de détecter des allongements, des écrasements et/ou des forces de cisaillement, en particulier sous la forme d'un capteur d'allongement, en particulier d'une jauge d'allongement.

6. Ecrou de vis (1) selon l'une quelconque des revendications précédentes, dans lequel l'unité de transpondeur RFID (8) présente un accumulateur d'énergie, en particulier un condensateur.

7. Ecrou de vis (1) selon l'une quelconque des revendications précédentes, dans lequel l'antenne (10) est disposée ou réalisée sous forme de bobine sur la carte de circuits imprimés (9).

8. Ecrou de vis (1) selon la revendication 7, dans lequel l'antenne (10) est réalisée sous la forme d'une bobine imprimée sur la carte de circuits imprimés (9).

9. Ecrou de vis (1) selon l'une quelconque des revendications précédentes, dans lequel le module de capteur (5) comprend plusieurs capteurs de détection de déformation (7) qui sont disposés au niveau du corps de base (6), en particulier en étant répartis uniformément autour d'une circonférence extérieure.

10. Ecrou de vis (1) selon l'une quelconque des revendications précédentes, comprenant une gaine de protection (17) pour le module de capteur (5).

11. Dispositif de montage (2), comprenant un écrou de vis (1) selon l'une quelconque des revendications précédentes et une clé à écrou (3), dans lequel un lecteur RFID (16) est relié solidement à la clé à écrou (3) ou peut être relié ou est relié de manière amovible à la clé à écrou (3), et/ou dans lequel un logement d'écrou à vis (18) de la clé à écrou (3) présente au moins un évidement (19) pour recevoir ledit au moins un capteur de détection de déformation (7) de l'écrou de vis (1), dans lequel ledit au moins un évidement (19) est réalisé de manière correspondante à une zone dudit au moins un capteur de détection de déformation (7) dépassant d'une surface du corps de base (6) de l'écrou de vis (1) .
